# EUROPEAN PATENT APPLICATION

(11) **EP 4 804 706 A1**
(43) Date of publication of application: **09.09.2026**
(21) Application number: 26157207.7
(22) Date of filing: 09.02.2026
(51) Int. Cl.: H04W 74/0816

(54) **TRANSMISSION OPPORTUNITY SHARING THROUGH FREQUENCY DOMAIN SPLITTING**

(30) Priority: 03.03.2025 US 202519068503
(71) Applicant: Nokia Technologies Oy, 02610 Espoo (FI)
(72) Inventor: TALARICO, Salvatore, Sunnyvale (US); DOPPLER, Klaus Franz, Albany (US); DEZFOULI, Behnam, San Jose (US); JOHNSSON, Kerstin, Palo Alto (US); GENC, Eda, Espoo (FI)
(74) Representative: Nokia EPO representatives

(57) **Abstract**

Embodiments of the present disclosure relate to transmission opportunity sharing through frequency domain splitting. An apparatus determines a sub-bandwidth portion of a bandwidth allocated to a second access point (AP) device for accessing a transmission opportunity (TxOP) associated with a first AP device. The apparatus is associated with the second AP device, and the bandwidth is associated with the TxOP. The apparatus communicates with the second AP device on the sub-bandwidth portion.

## Description

### FIELD

Various example embodiments relate to the field of telecommunication and in particular, to methods, devices, apparatuses and computer readable storage medium for transmission opportunity (TxOP) sharing through frequency domain splitting.

### BACKGROUND

A communication network can be seen as a facility that enables communications between two or more communication devices, or provides communication devices access to a data network. A wireless communication network is one example of a communication network.

Such communication networks may operate in accordance with standards, such as those promulgated by Third Generation Partnership Project (3GPP) or Institute of Electrical and Electronics Engineers (IEEE). For example, 3GPP standards cover cellular communication networks from the first generation (1G) to the fifth generation (5G) and beyond. IEEE standards cover a variety of wired and wireless communication technologies used in Local Area Networks (LANs), Personal Area Networks (PANs), Broadband Wireless Access (BWA) and so on. These standards ensure interoperability, performance, and reliability within a communication network and across different communication networks.

### SUMMARY

In general, example embodiments of the present disclosure provide a solution for TxOP sharing through frequency domain splitting.

In a first aspect, there is provided a first apparatus. The apparatus comprises at least one processor; and at least one memory storing instructions. When executed by the at least one processor, the instructions cause the first apparatus at least to: receive, from one or more second apparatuses, requests for resource allocation on a transmission opportunity (TxOP) associated with the first apparatus; determine to allow concurrent access by at least one second apparatus among the one or more second apparatuses to the TxOP; and transmit, to the at least one second apparatus, allocation information for allocating at least one sub-bandwidth portion of a bandwidth associated with the TxOP to the at least one second apparatus.

In a second aspect, there is provided a second apparatus. The apparatus comprises at least one processor; and at least one memory storing instructions. When executed by the at least one processor, the instructions cause the second apparatus at least to: transmit, to a first apparatus, a request for resource allocation on a transmission opportunity (TxOP) associated with the first apparatus; and receive, from the first apparatus, allocation information for allocating at least one sub-bandwidth portion of a bandwidth associated with the TxOP to at least one second apparatus comprising the second apparatus.

In a third aspect, there is provided an apparatus. The apparatus comprises at least one processor; and at least one memory storing instructions. When executed by the at least one processor, the instructions cause the apparatus at least to: determine a sub-bandwidth portion of a bandwidth allocated to a second access point (AP) device for accessing a transmission opportunity (TxOP) associated with a first AP device, wherein the apparatus is associated with the second AP device, and the bandwidth is associated with the TxOP; and communicate with the second AP device on the sub-bandwidth portion.

In a fourth aspect, there is provided a second apparatus. The first apparatus comprises at least one processor; and at least one memory storing instructions. When executed by the at least one processor, the instructions cause the second apparatus at least to: determine a sub-bandwidth portion of a bandwidth allocated to the second apparatus for accessing a transmission opportunity (TxOP) associated with a first apparatus, wherein the bandwidth is associated with the TxOP; determine an allocated duration for the second apparatus on the sub-bandwidth portion; and communicate with at least one non-access point (non-AP) station device associated with the second apparatus within the allocated duration on the sub-bandwidth portion.

In a fifth aspect, there is provided a method implemented at a first apparatus. The method comprises: receiving, at a first apparatus from one or more second apparatuses, requests for resource allocation on a transmission opportunity (TxOP) associated with the first apparatus; determining to allow concurrent access by at least one second apparatus among the one or more second apparatuses to the TxOP; and transmitting, to the at least one second apparatus, allocation information for allocating at least one sub-bandwidth portion of a bandwidth associated with the TxOP to the at least one second apparatus.

In a sixth aspect, there is provided a method implemented at a second apparatus. The method comprises: transmitting, at a first apparatus to a first apparatus, a request for resource allocation on a transmission opportunity (TxOP) associated with the first apparatus; and receiving, from the first apparatus, allocation information for allocating at least one sub-bandwidth portion of a bandwidth associated with the TxOP to at least one second apparatus comprising the second apparatus.

In a seventh aspect, there is provided a method implemented at an apparatus. The method comprises: determining, at an apparatus, a sub-bandwidth portion of a bandwidth allocated to a second access point (AP) device for accessing a transmission opportunity (TxOP) associated with a first AP device, wherein the apparatus is associated with the second AP device, and the bandwidth is associated with the TxOP; and communicating with the second AP device on the sub-bandwidth portion.

In an eighth aspect, there is provided a method implemented at a second apparatus. The method comprises: determining, at a second apparatus, a sub-bandwidth portion of a bandwidth allocated to the second apparatus for accessing a transmission opportunity (TxOP) associated with a first apparatus, wherein the bandwidth is associated with the TxOP; determining an allocated duration for the second apparatus on the sub-bandwidth portion; and communicating with at least one non-access point (non-AP) station device associated with the second apparatus within the allocated duration on the sub-bandwidth portion.

In a ninth aspect, there is provided a first apparatus. The apparatus comprises means for receiving, at a first apparatus from one or more second apparatuses, requests for resource allocation on a transmission opportunity (TxOP) associated with the first apparatus; means for determining to allow concurrent access by at least one second apparatus among the one or more second apparatuses to the TxOP; and means for transmitting, to the at least one second apparatus, allocation information for allocating at least one sub-bandwidth portion of a bandwidth associated with the TxOP to the at least one second apparatus.

In a tenth aspect, there is provided a second apparatus. The apparatus comprises: means for transmitting, at a first apparatus to a first apparatus, a request for resource allocation on a transmission opportunity (TxOP) associated with the first apparatus; and means for receiving, from the first apparatus, allocation information for allocating at least one sub-bandwidth portion of a bandwidth associated with the TxOP to at least one second apparatus comprising the second apparatus.

In an eleventh aspect, there is provided an apparatus. The apparatus comprises: means for determining, at an apparatus, a sub-bandwidth portion of a bandwidth allocated to a second access point (AP) device for accessing a transmission opportunity (TxOP) associated with a first AP device, wherein the apparatus is associated with the second AP device, and the bandwidth is associated with the TxOP; and means for communicating with the second AP device on the sub-bandwidth portion.

In a twelfth aspect, there is provided a second apparatus. The second apparatus comprises: means for determining, at a second apparatus, a sub-bandwidth portion of a bandwidth allocated to the second apparatus for accessing a transmission opportunity (TxOP) associated with a first apparatus, wherein the bandwidth is associated with the TxOP; means for determining an allocated duration for the second apparatus on the sub-bandwidth portion; and means for communicating with at least one non-access point (non-AP) station device associated with the second apparatus within the allocated duration on the sub-bandwidth portion.

In a thirteenth aspect, there is provided a non-transitory computer readable medium comprising program instructions for causing an apparatus to perform at least the method according to any one of the above fifth to eighth aspect.

In a fourteenth aspect, there is provided a computer program product comprising program instructions for performing at least the method according to any one of the above fifth to eighth aspects.

In a fifteenth aspect, there is provided a computer program comprising instructions, which, when executed by an apparatus, cause the apparatus at least to perform at least the method according to any one of the above fifth to eighth aspects.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
Fig. 1A illustrates an example communication network in which embodiments of the present disclosure may be implemented;
Fig. 1B illustrates an example of a cooperative time division multiple access (C-TDMA) process associated with some embodiments of the present disclosure;
Fig. 2A illustrates a flowchart illustrating a process of TxOP sharing through frequency domain splitting according to some embodiments of the present disclosure;
Fig. 2B illustrates a flowchart illustrating a process of utilization of a shared TxOP according to some embodiments of the present disclosure;
Fig. 3 illustrates an example of a User Info field for each shared AP in a trigger frame for resource allocation according to some embodiments of the present disclosure;
Fig. 4 illustrates a first example of a process of TxOP sharing through frequency domain splitting according to some embodiments of the present disclosure;
Fig. 5 illustrates a second example of a process of TxOP sharing through frequency domain splitting according to some embodiments of the present disclosure;
Fig. 6 illustrates a third example of a process of TxOP sharing through frequency domain splitting according to some embodiments of the present disclosure;
Fig. 7 illustrates a flowchart of a method implemented at a first apparatus according to some embodiments of the present disclosure;
Fig. 8 illustrates a flowchart of a method implemented at a second apparatus according to some embodiments of the present disclosure;
Fig. 9 illustrates a flowchart of a method implemented at an apparatus according to some embodiments of the present disclosure;
Fig. 10 illustrates a flowchart of a method implemented at a second apparatus according to some embodiments of the present disclosure;
Fig. 11 illustrates a simplified block diagram of an apparatus that is suitable for implementing embodiments of the present disclosure; and
FIG. 12 illustrates a block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware
      and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Global System for Mobile Communications (GSM), General Packet Radio Service (GPRS), Wideband Code Division Multiple Access (WCDMA), Long Term Evolution (LTE), LTE-Advanced (LTE-A), New Radio (5G NR), High-Speed Packet Access (HSPA), Narrow Band Internet of Things (NB-IoT), Wireless Local Area Network (WLANs), Wireless Personal Area Network (WPANs), Worldwide Interoperability for Microwave Access (WiMAXs) and so on. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology.

As used herein, the term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

WLANs, commonly implemented under IEEE 802.11 standards (i.e., Wireless Fidelity (Wi-Fi)), enables high-speed wireless connectivity across diverse environments, including residential, enterprise, industrial, and public spaces. These networks support bidirectional communication between stations (STAs), facilitating data, voice, and multimedia transmission.

A STA refers to an entity that can be addressed uniquely (i.e., it has a single and unique Medium Access Control (MAC) address) and that provides 802.11 physical (PHY) and MAC functions. STAs can communicate with each other directly. A set of STAs that can communicate with each other form a Basic Service Set (BSS), and the area that their signals cover forms a Basic Service Area (BSA). A STA may be implemented in an access point (AP) or implemented as a non-AP STA depending on its functions.

An AP refers to a device in WLAN that provides wireless devices with wireless access to a wired or a wireless network. The AP may serve as a hub for the WLAN and may be regarded as a special kind of network device implemented in WLAN. The AP typically has access or an interface to a Distribution System (DS) or another type of wired/wireless network that carries traffic in and out of the BSS. For example, the AP comprises a STA and a DS access function (DSAF) and enables access to the wired network for other STAs over the wireless medium. The AP may be responsible for sending and receiving wireless signals, network connection management and data forwarding. By way of example rather than limitation, an AP may also be referred to as a Wi-Fi router, a Radio Router, a Radio Transceiver, a Transceiver Function ("TF"), a Wireless Access Node, a Wireless Switch, an Access Bridge, or some other terminology, and so forth.

A non-AP STA refers to a wireless device that connects to an AP to access the network. A non-AP STA serves as a user of the WLAN and may be regarded as a special kind of terminal device implemented in WLAN. Non-AP STAs are typically end-user devices that do not provide access to other devices but rather consume network services. By way of example rather than limitation, a non-AP STA may also be referred to as a wireless client, a client STA, a subscriber STA, a subscriber unit, a remote STA, a remote terminal, an end device, an access terminal, a terminal device, a mobile station, a user terminal, a user agent, a user device, user equipment, or some other terminology. Examples of the terminal devices may be implemented as a non-AP STA if located in a WLAN, and duplications thereof will be omitted.

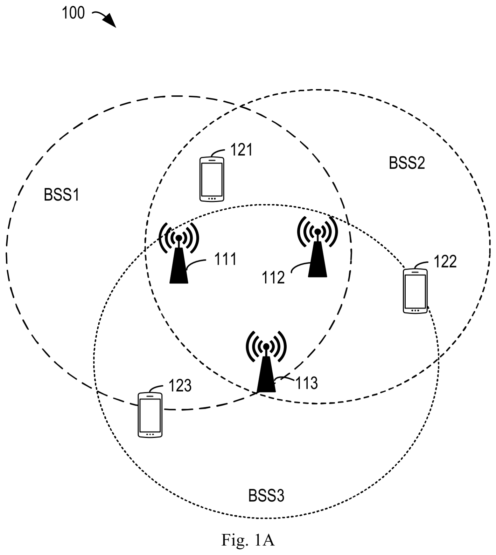

Principle and embodiments of the present disclosure will be described in detail below with reference to the accompanying drawings. Reference is first made to Fig. 1A, which illustrates an example communication system 100 in which embodiments of the present disclosure may be implemented. The network environment 100, which may be a part of a communication network, comprises multiple basic service sets (BSSes), e.g., a BSS1, a BSS2 and a BSS3. The BSS1 comprises a first access point (AP) 111 and at least one non-AP STA (e.g., a non-AP STA 121). The BSS2 comprises a second AP 112 and at least one non-AP STA (e.g., a non-AP STA 122). The BSS3 comprises a third AP 113 and at least one non-AP STA (e.g., a non-AP STA) 123. The non-AP STA 121 may be within the coverage area of the first AP 111 and associated with the first AP 111, the non-AP STA 122 may be within the coverage area of the second AP 112 and associated with the second AP 112, and the non-AP STA 123 may be within the coverage area of the third AP 113 and associated with the third AP 113. The first AP 111, the second AP 112 and the third AP 113 could be collectively called the AP(s) 110, and the non-AP STA 121, the non-AP STA 122 and the non-AP STA 123 could be collectively called the non-AP STA(s) 120.

The first AP 111 can perform uplink/downlink transmission to/from non-AP STA(s) 120 associated with the first AP 111 in accordance with IEEE 802.11 communication standards. The first AP 111 may enable the non-AP STA 121 to communicate with other devices coupled to the first AP 111. Similarly, the second AP 112 may communicate with the non-AP STA 122 associated with the second AP 112 in accordance with IEEE 802.11 communication standards, and the second AP 112 may enable the non-AP STA 122 to communicate with other devices coupled to the second AP 112. The third AP 113 may communicate with the non-AP STA 123 associated with the third AP 113 in accordance with IEEE 802.11 communication standards, and the third AP 113 may enable the non-AP STA 123 to communicate with other devices coupled to the third AP 113. In some implementations, the first AP 111, the second AP 112 and the third AP 113 may also communicate with each other.

The non-AP STA(s) 120 may be mobile devices that are non-stationary (e.g., not having fixed locations) or may be stationary devices. Although the non-AP STA(s) 120 are illustrated as mobile phones in Fig. 1A, they may be PDAs, other handheld devices, netbooks, notebook computers, tablet computers, laptops, display devices (e.g., televisions, monitor devices, etc.), printers, etc.

In some embodiments, the communication system 100 may further include a data network (e.g., the Internet or other data networks). The AP(s) 110 may be coupled to the data network and may enable the non-AP STA(s) 120 to access the data network through a DS. The AP(s) 110 may be coupled to the data network and may enable the non-AP STA(s) 120 to access the data network through the DS.

The first AP 111, the second AP 112, and the third AP 113 may be deployed in a dense deployment scenario (such as a stadium or a convention center), and the coverage areas thereof may overlap. The first AP 111, the second AP 112, and the third AP 113 contend for access to the same channel, and may form a coordinated group of APs. A "coordinated group of APs" refers to a set of APs that collaborate in a coordinated manner to optimize network performance. This coordination helps reduce inter- AP contention and enables new multi-AP channel access strategies.

It is to be understood that the number of APs and non-AP STAs is only for the purpose of illustration without suggesting any limitations. The communication system 100 may include any suitable number of APs and non-AP STAs adapted for implementing embodiments of the present disclosure. Although not shown, in some implementations, peer-to-peer connections or ad hoc networks may be implemented within the communication system 100.

Communications in the communication system 100 may be implemented according to any proper communication protocol(s), comprising, but not limited to, IEEE 802.11a, IEEE 802.11b, IEEE 802.11g, IEEE 802.11n, IEEE 802.11ac, IEEE 802.11ax, IEEE 802.11be, IEEE 802.11bn and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

Further advancements in Wi-Fi technologies are necessary to meet the growing demands. For instance, due to limited reliability and non-deterministic channel access, the latency of Wi-Fi stations fails to meet user requirements, particularly for latency-sensitive applications such as Virtual Reality (VR), Mixed Reality (MR), and Augmented Reality (AR) (collectively known as XR). Therefore, it is essential to reduce latency.

In this regard, it is proposed that APs use a coordinated time division multiple access (C-TDMA) mechanism to share a transmission opportunity (TxOP) with another AP and its associated non-AP Stations (STAs), instead of terminating a TxOP by sending a CF-End (Contention Free-End) frame and leaving other APs to contend for a new TxOP. This approach leads to more efficient spectrum utilization and provides APs to serve low-latency traffic with more transmission opportunities.

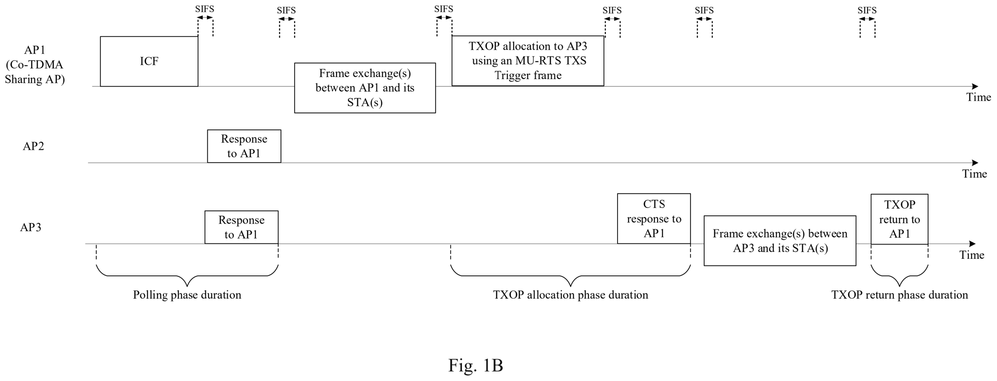

Fig. 1B illustrates an example of a C-TDMA process in accordance with some embodiments of the present disclosure. The C-TDMA process in Fig. 1B may involve multiple APs, such as AP1, AP2, and AP3, which can be implemented as the first AP 111, the second AP 112, and the third AP 113 shown in Fig. 1A, respectively.

As depicted in Fig. 1B, at the beginning of the TxOP, AP1 sends an Initial Control Frame (ICF), which invites other coordinating APs (e.g., AP2 and AP3) to respond if they wish to receive a portion of the TxOP. Each polled neighboring AP may reply with a Control Frame Response (CFR), indicating whether it wants part of the AP's TxOP or not.

AP1 then conducts its own downlink and uplink transmissions to/from non-AP STAs associated with it. Once AP1's BSS transmissions are completed, AP1 sends a Multi-user Request-to-Send TxOP Sharing (MU-RTS) Trigger frame to one of the neighboring APs that responded. This MU-RTS trigger frame includes at least the chosen AP's identifier (AP ID) and the duration of the shared TxOP portion. In this example of Fig. 1B, AP3 is chosen. Upon receiving the MU-RTS trigger frame, AP3 returns a Clear-to-Send (CTS) frame as response frame to AP1.

AP3 then utilizes its allocated portion of the TxOP for its own downlink and uplink transmissions. If it finishes its transmissions before the allocated time expires, AP3 sends a "TxOP return" frame to AP1, returning any unused time.

The process in Fig. 1B allows a sharing AP (e.g., AP1) to share its TxOP with another responding or coordinating AP (e.g., AP3). In this process, AP1 acts as a sharing AP (also referred to as a TxOP holder) that shares a TxOP with other coordinating APs, while AP3 acts as a shared AP (also referred to as a TxOP responder).

The C-TDMA process has certain restrictions, such as no TxOP sharing being allowed for Access Category Voice (ACVO) traffic; the shared portion of the TxOP cannot exceed the TxOP duration advertised by the sharing AP; and the sharing AP may use any remaining portion of the TxOP for its own BSS transmissions to/from its associated non-AP STAs.

The C-TDMA mechanism enables a sharing AP, which is part of a coordinated group of APs, to poll multiple coordinating APs simultaneously to determine whether they want part of its TxOP. However, the current procedure assumes that only one shared AP will use the bandwidth associated with the TxOP at any given time. This may not always be the optimal approach. In fact, in some cases, a shared AP may not need or be able to use the entire bandwidth associated with the TxOP and may prefer to use only part of it, leading to inefficient use of the shared resources. Moreover, while using the entire bandwidth associated with the TxOP and allowing a single shared AP to utilize the shared time-domain resources within that TxOP at a given time may reduce the amount of shared TxOP needed by the shared AP (i.e., higher bandwidth (BW) leads to higher data rate), it may also delay transmissions from other shared APs that would have liked to use the shared TxOP.

In light of the above, enhancements to the C-TDMA mechanism are needed. To further reduce latency, improve resource efficiency, and expand TxOP sharing options, embodiments of the present disclosure propose a mechanism that enables a sharing AP to allocate portions of its TxOP bandwidth to multiple shared APs simultaneously. In some embodiments, after receiving requests for resource allocation on a TxOP associated with the first apparatus from one or more second apparatuses, the first apparatus may allocate at least one sub-bandwidth portion of a bandwidth associated with the TxOP to at least one second apparatus among the one or more second apparatuses. In other words, concurrent access to the TxOP by the at least one second apparatus may be allowed. By enabling a sharing AP to dynamically allocate portions of its TxOP to one or more neighboring APs sharing the same bandwidth, these techniques may improve spectral efficiency and reduce interference. This collaborative strategy facilitates more robust and efficient management of low-latency traffic in Wi-Fi deployments.

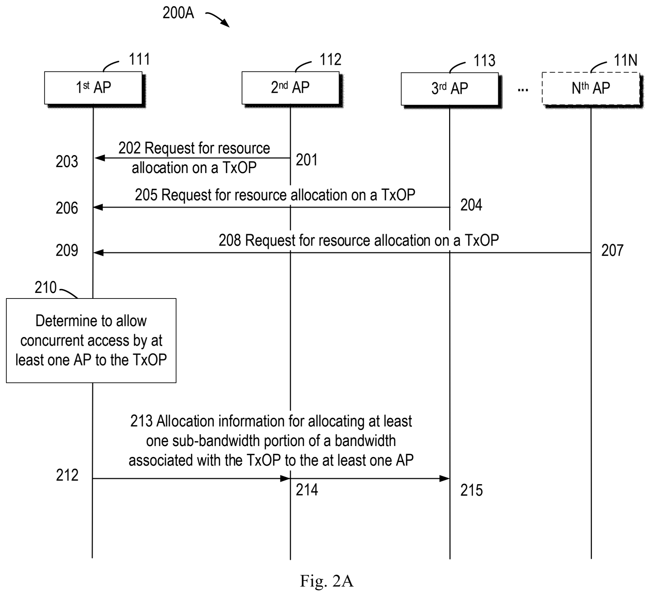

Reference is now made to Fig. 2A, which shows a process 200A of TxOP sharing through frequency domain splitting according to an embodiment of the present disclosure. The process 200A may be implemented in the communication system 100 in Fig. 1A or other communication systems. For the purpose of discussion, the process 200A will be described with reference to Fig. 1A. The process 200A may involve the first AP 111 and one or more other APs (e.g., the second AP 112, the third AP 113, ..., the Nth AP 11N). The APs 111, 112, ..., 11N may be coordinating APs. The number of APs involved in the process 200A is not limiting.

In the process 200A, each of the one or more APs 112, 113, ..., 11N transmits a respective resource allocation request to the first AP 111. The first AP 111 receives multiple resource allocation requests from one or more APs 112, 113, ..., 11N. For example, the second AP 112 transmits (201) a request 202 for resource allocation on a TxOP associated with the first AP 111 to the first AP 111, the third AP 113 transmits (204) a request 205 for resource allocation on a TxOP associated with the first AP 111 to the first AP 111, ..., and the Nth AP device 222 may transmit (207) a request 208 for resource allocation on a TxOP associated with the first AP 111 to the first AP 111. The first AP 111 receives (203) the request 202 for resource allocation on a TxOP associated with the first AP 111 from the second AP 112, receives (206) the request 205 for resource allocation on a TxOP associated with the first AP 111 from the third AP 113, ..., and receives (209) the request 208 for resource allocation on a TxOP associated with the first AP 111 from the Nth AP 11N. In some embodiments, the multiple requests for resource allocation on a TxOP associated with the first AP 111 may be transmitted simultaneously or sequentially.

The first AP 111 determines (210) to allow concurrent access to the TxOP by at least one AP among the one or more APs 112, 113, ..., 11N. In some implementations, the at least one AP allowed to access the TxOP may include all of the APs requesting resource allocation. Alternatively, the at least one AP allowed to access the TxOP may include a subset of the one or more APs requesting resource allocation. For example, the maximum number of shared APs granted concurrent TxOP access may be determined by the sharing AP or may be predefined.

The first AP 111 transmits (212) an allocation information 213 for allocating at least one sub-bandwidth portion of a bandwidth associated with the TxOP to the at least one AP. Accordingly, the at least one AP receives the allocation information 213 from the first AP 111. For example, if the first AP 111 determines to allow concurrent access to the TxOP by the second AP 112 and the third AP 113, the first AP 111 transmits the allocation information 213 to the second AP 112 and the third AP 113. The second AP 112 receives (214) the allocation information 213 from the first AP 111, and the third AP 113 receives (215) the allocation information 213 from the first AP 111. The at least one AP 112, 113 allowed to access the TxOP may be referred to as shared APs. The first AP 111 may be referred to as a sharing AP. In this way, at least one AP may be granted concurrent access to the same TxOP. The resource efficiency may be improved and the latency may be reduced.

In some implementations, the first AP 111 may transmit an indication of an intention to share the TxOP to a set of APs including the one or more APs 112, 113, ..., 11N. The one or more APs 112, 113, ..., 11N may transmit the resource allocation requests in response to receiving the indication of an intention to share the TxOP from the first AP 111. In some implementations, the indication of the intention may be carried in a first trigger frame (e.g., an ICF trigger frame), and the resource allocation requests may be carried in first response frames (e.g., CFR frames) associated with the first trigger frame. In some implementations, each AP receiving the first trigger frame may transmit a response frame indicating whether it requests resource allocation on the TxOP or not. Alternatively, only those APs requesting resource allocation on the TxOP may transmit the first response frames. In some implementations, the resource allocation requests may be implemented as TxOP access requests.

In some embodiments, the first trigger frame may include an indication of the bandwidth associated with the TxOP. The indication of the bandwidth may be carried in at least one of a Common Info subfield, or a User Info subfield in the first trigger frame. For example, a sharing AP may indicate the TxOP bandwidth it intends to share within the Common Info Subfield and/or User Info subfield of the related ICF trigger frame. Alternatively or additionally, the first trigger frame may include an indication of a maximum duration length of the TxOP for sharing. The indication of the maximum duration length of the TxOP for sharing may be carried in at least one of a Common Info subfield, or a User Info subfield in the first trigger frame. For example, a sharing AP may indicate maximum duration length of the TxOP within the Common Info Subfield and/or User Info subfield of the related ICF trigger frame.

In some embodiments, the resource allocation requests may include respective resource amount requirements of the one or more APs 112, 113, ..., 11N. For example, a shared AP may include in its response to the sharing AP's ICF trigger frame, the (minimum) amount of bandwidth it would need to adequately serve its traffic when using the shared TxOP. Alternatively or additionally, the resource allocation requests may include respective access category (AC) classes of the one or more APs 112, 113, ..., 11N.

In some embodiments, when determining to allow concurrent access by the at least one shared AP to the TxOP, the first AP 111 may determine an order of the one or more APs 112, 113, ..., 11N based on the resource allocation requests. In some implementations, the first AP 111 may select a subset of the responding APs. For example, the first AP 111 may determine to allow concurrent access to the TxOP by the second AP 112 and the third AP 113 among the one or more APs 112, 113, ..., 11N based on the order of the responding APs. The first AP 111 may determine respective portions of the bandwidth associated with the TxOP to be allocated to the at least one shared AP. The bandwidth split of the shared TxOP may be associated with the order of the shared APs. For example, based on the resource amount requirements and the AC classes of the responding APs, the sharing AP 111 may determine the order in which the TxOP should be allocated to the shared APs and how the TxOP bandwidth should be split among the shared APs. This would further improve resource efficiency and is beneficial especially for latency-sensitive applications.

In some embodiments, a sum of the at least one sub-bandwidth portion of the bandwidth associated with the TxOP may be no larger than the bandwidth associated with the TxOP to be allocated to the at least one shared AP. Alternatively or additionally, the at least one sub-bandwidth portion of the bandwidth associated with the TxOP are orthogonal with each other. For example, the sub-bandwidth portion allocated to the second AP 112 and the sub-bandwidth portion allocated to the third AP 113 may be orthogonal. Alternatively or additionally, the at least one sub-bandwidth portion of the bandwidth associated with the TxOP have equal bandwidth amounts. For example, the sub-bandwidth portion allocated to the secondAP 112 and the sub-bandwidth portion allocated to the third AP 113 may have equal bandwidth amounts.

In some embodiments, the at least one shared AP may include two shared APs (e.g., the second AP 112 and the third AP 113). The APs 112 and 113 are non-primary channel access (NPCA) capable and have NPCA enabled. The first AP 111 may allocate a NPCA primary channel of the two shared APs to a second one of the two shared APs as a primary channel of the second shared AP on the TxOP. A first one of the two shared APs may use a reference primary channel of the two shared APs as a primary channel of the first shared AP on the TxOP. In other words, when the shared APs and their associated non-AP STA are NPCA-capable, and NPCA is enabled, the TxOP may be shared by at most two shared APs, where one shared AP operates on the reference primary channel during the shared TxOP allocation and the other operates on the NPCA primary channel during the shared TxOP allocation.

In some embodiments, the allocation information may include at least one identifier (ID) associated with the at least one shared AP. The shared AP may thus know that it is granted access the shared TxOP if the allocation information comprises the ID of the shared AP.

In some embodiments, the allocation information may be carried in a second trigger frame (e.g., a MU-RTS transmission (TXS) trigger frame). The second trigger frame may include at least one information field. An information field of the at least one information field carries respective information for allocating a respective sub-bandwidth portion of the bandwidth associated with the TxOP to a respective shared AP of the at least one shared AP. In some implementations, a first field of the information field may carry an ID of the respective shared AP. In some implementations, a second field may carry an indication of the respective sub-bandwidth portion. In some implementations, a third field may carry an indication of an allocated duration for the respective shared AP on the respective sub-bandwidth portion. In a more specific example, the information field may be a User Info field, the first field is an ID field, the second field is a resource unit (RU) allocation field or a resource allocation field different from the RU allocation field, and the third field is an allocation duration field. For example, the MU-RTS TXS trigger frame may contain at least one User Info field, each User Info field containing the dedicated information (e.g., AP ID, resource allocation, allocation duration) for a corresponding shared AP.

In some embodiments, an order of the at least one information field within the second trigger frame may correspond to the order of the at least one shared AP. For example, the order of at least one User Info field in the MU-RTS TXS trigger will be constructed based on the order of the at least one shared AP associated with respective resource amount requirements and AC classes.

In some embodiments, the respective sub-bandwidth portion may include at least one channel. In some implementations, a primary channel of the respective shared AP on the TxOP is a first one among the at least one channel indicated in the second field. Alternatively, a primary channel of the respective shared AP on the TxOP is a last one among the at least one channel indicated in the second field. In other words, the channel that a shared AP uses as its primary channel during its shared TxOP allocation may be implicitly indicated and may be the first or the last channel of the shared AP's resource allocation.

In some embodiments, the respective shared AP is NPCA capable and has NPCA enabled. If the respective sub-bandwidth portion may include the reference primary channel, a primary channel of the respective shared AP on the TxOP is a reference primary channel of the respective shared AP. Alternatively, if the respective sub-bandwidth portion may include the NPCA primary channel, a primary channel of the respective shared AP on the TxOP is a NPCA primary channel of the respective shared AP. In other words, the channel that a shared AP uses as its primary channel during its shared TxOP allocation may be implicitly indicated and may be either the shared AP's reference primary channel or NPCA primary channel, depending on which is within the shared AP's resource allocation.

In some embodiments, the information field may further include at least one bit for indicating a primary channel of the respective shared AP on the TxOP. For example, the channel that a shared AP uses as its primary channel during its shared TxOP allocation may be specified by some of the bits between B29 and B38 of the User Info field associated with the shared AP.

In some implementations, the respective shared AP is NPCA capable and has NPCA enabled. The at least one bit may include one bit. If the one bit has a first value, the primary channel of the respective shared AP on the TxOP is a reference primary channel of the respective shared AP. If the one bit has a second value, the primary channel of the respective shared AP on the TxOP is a NPCA primary channel of the respective shared AP. In other words, a single bit may be used to indicate whether to use the reference primary channel or NPCA primary channel as the shared AP' primary channel during its shared TxOP allocation.

In some implementations, the respective shared AP is NPCA capable and has NPCA enabled. The at least one bit may include more than one bits. The respective sub-bandwidth portion may include at least one channel. In some examples, the at least one bit may include a bitmap indicating the primary channel among the at least one channel. In other words, a group of bits carrying a bitmap may be used to indicate the specific channel in the resource allocation to use as the shared AP' primary channel during its shared TxOP allocation. Alternatively, the at least one bit may include an indication of an offset from a first one among the at least one channel indicated in the second field to the primary channel. Alternatively, the at least one bit may include an indication of an offset from a last one among the at least one channel indicated in the second field to the primary channel. In other words, a group of bits specifying an offset from either the first or last channel in the resource allocation may be used to indicate the specific channel in the resource allocation to use as the shared AP' primary channel during its shared TxOP allocation.

In some embodiments, the information field may further include an indication indicative of a switching delay of the respective shared AP switching from a reference primary channel to a primary channel of the respective shared AP on the TxOP and switching back from the primary channel of the shared AP on the TxOP to the reference primary channel.

In some embodiments, an allocated duration for the respective shared AP on the respective sub-bandwidth portion may start from a time interval after receiving a second response frame associated with the allocation information from a last shared AP in an order of the at least one shared AP. Alternatively, an allocated duration for the respective shared AP on the respective sub-bandwidth portion may start from a time interval after receiving a second response frame associated with the allocation information from the respective shared AP. The time interval may be a short interframe space (SIFS) or other predefined time intervals or may be indicated in the second trigger frame. In some implementations, the second response frame may be a Clear-to-Send (CTS) response frame.

In some embodiments, the allocation information may include allocated durations for the at least one shared AP on the at least one sub-bandwidth portion. In some implementations, the allocated durations for the at least one shared AP may be different. Alternatively, the allocated durations for the at least one shared AP may have the same length.

In some embodiments, the first AP 111 may receive, from the at least one shared AP, at least one second response frame associated with the allocation information. The at least one shared AP may transmit the second response frames in response to receiving the allocation information.

In some implementations, each of the at least one second response frame may occupy the entire bandwidth associated with the TxOP. In other words, the bandwidth for the at least one second response frame (e.g., CTS response frames) is equivalent to the entire bandwidth associated with the TxOP.

Alternatively, each of the at least one second response frame may be received on a respective sub-bandwidth portion of the bandwidth allocated to a respective shared AP of the at least one shared AP. In other words, the bandwidth for a second response frame (e.g., a CTS response frame) transmitted by a shared AP is the bandwidth associated with the TxOP allocated to that shared AP.

In some examples, each of the at least one second response frame is received on a primary channel of a respective shared AP of the at least one shared AP on the TxOP. For example, the shared AP would transmit its CTS using the shared AP's primary channel for its shared TxOP allocation.

In some embodiments, the at least one second response frame may be concurrently received after one SIFS from transmitting the allocation information. Alternatively, the at least one second response frame may be received sequentially.

In some implementations, the at least one second response frame may be received sequentially in an order of at least one information field associated with the at least one shared AP in a second trigger frame carrying the allocation information. For example, each shared AP addressed in the MU-RTS TXS trigger frame transmits a CTS response on shared AP's primary channel for its shared TxOP allocation sequentially, e.g., in the order of their User Info fields in the MU-RTS TXS trigger.

In some implementations, the at least one second response frame may be received sequentially in an order of values of at least one ID associated with the at least one shared AP. For example, each shared AP addressed in the MU-RTS TXS trigger frame transmits a CTS response on shared AP's primary channel for its shared TxOP allocation sequentially, e.g., in the order AP ID values of the shared APs.

In some implementations, the at least one second response frame may be received sequentially in an order of frequency domain locations of the at least one sub-bandwidth portion allocated to the at least one shared AP. For example, each shared AP addressed in the MU-RTS TXS trigger frame transmits a CTS response on shared AP's primary channel for its shared TxOP allocation sequentially, e.g., in the order resource allocation for the shared APs, e.g., from lowest to highest in frequency domain.

In some embodiments, each of the at least one second response frame may carry an indication of a respective sub-bandwidth portion of the bandwidth allocated to a respective shared AP of the at least one shared AP. Alternatively or additionally, each of the at least one second response frame may carry an indication of a primary channel of a respective shared AP of the at least one shared AP on the TxOP. For example, after receiving the allocation information, the shared AP may transmit a CTS response to the sharing AP carrying an indication of its resource allocation and/or an indication of the primary channel for its shared TxOP allocation.

In some embodiments, the first AP 111 may receive a TxOP return frame from one among the at least one shared AP, and the TxOP return frame may occupy the entire bandwidth associated with the TxOP. In other words, among the at least one shared APs granted concurrent access to the TxOP, one shared AP will transmit a "TxOP return" frame on the entire bandwidth of the TxOP, while other shared AP(s) will not transmit a "TxOP return" frame. In some implementations, the allocated duration does not include the time necessary for transmitting the TxOP return frame.

In some implementations, the shared AP that transmits the TxOP return frame is NPCA capable and has NPCA enabled. A primary channel of the shared AP on the TxOP is a reference primary channel of the shared AP. In other words, the shared AP that operates on reference primary channel during its shared TxOP allocation is the one sending the TxOP return frame.

Alternatively, the first AP 111 may transmit, to the shared AP, an indication indicative of transmitting the TxOP return frame after expiry of the allocated duration for the shared AP. In other words, the shared AP sending the TxOP return frame may be indicated by the sharing AP.

In some implementations, the shared AP that transmits the TxOP return frame may have a longest allocated duration on a respective sub-bandwidth portion of the bandwidth associated with the TxOP among the at least one shared AP.

In some embodiments, the first AP 111 may receive at least one TxOP return frame from the at least one shared AP. A respective TxOP return frame of the at least one TxOP return frame is received from a respective shared AP of the at least one shared AP before expiry of an allocated duration for the respective shared AP. The allocated duration for the respective shared AP may include a maximum available duration for traffic on the respective shared AP and a duration for the respective TxOP return frame. In other words, a sharing AP shall assume that the shared APs always return their shared TxOP allocations before the end of their allocated duration. The allocated duration may include the time necessary for transmitting the TxOP return frame.

Alternatively, the first AP 111 may receive a TxOP return frame from one among the at least one shared AP. The shared AP is a last shared AP in an order of the at least one shared AP. In other words, a sharing AP shall assume that the TxOP is terminated upon the reception of the latest TxOP return frame from one of the sharing APs. For example, the TxOP return may be provided by only one shared AP, which should be expected to be the last shared AP in the order of the at least one shared AP.

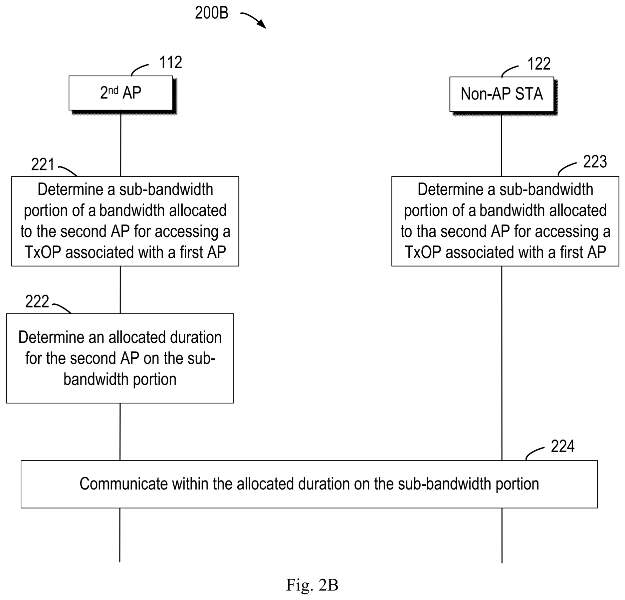

Fig. 2B shows a flowchart illustrating a process 200B of utilization of a shared TxOP according to some embodiments of the present disclosure. The process 200B may be implemented in the communication system 100 in Fig. 1A or other communication systems. For the purpose of discussion, the process 200B will be described with reference to Fig. 1A. The process 200B may involve the second AP 112 and a non-AP STA 122 associated with the second AP 112. The process 200A in Fig. 2A and the process 200B in Fig. 2B may be implemented independently. Alternatively, the process 200B may be regarded as a continuation procedure of the process 200A in Fig. 2A. Some embodiments of the process 200A in Fig. 2A may be combined with the process 200B in Fig. 2B.

In the process 200B, the second AP 112 determines (221) a sub-bandwidth portion of a bandwidth associated with a TxOP. The sub-bandwidth portion of the band is allocated to the second AP 112 for accessing the TxOP associated with a first AP. The second AP 112 determines (222) an allocated duration for the second AP 112 on the sub-bandwidth portion of the band associated with the TxOP. The first AP may act as a sharing AP, and the second AP 112 may act as a shared AP. The non-AP STA 122 is associated with the second AP 112, and determines (223) the sub-bandwidth portion of the bandwidth allocated to the second AP 112 for accessing the TxOP. The second AP 112 communicates (224) with at least one non-AP STA associated with the second AP 112 within the allocated duration on the sub-bandwidth portion.

In some embodiments, the second AP 112 may receive, from the first AP, a trigger frame for enabling sharing of the TxOP. The trigger frame may carry allocation information, and the second AP 112 may determine the sub-bandwidth portion and the allocated duration based on the allocation information. In a specific example, the trigger frame may be implemented as a MU-RTS TXS trigger frame. In some implementations, after receiving the trigger frame for enabling sharing of the TxOP from the first AP, the second AP 12 may transmit a response frame associated with the trigger frame to the first AP. For example, the response frame may be a CTS frame.

In some embodiments, in order to determine the sub-bandwidth portion of the bandwidth allocated to the second AP 112 for accessing the TxOP, the non-AP STA 122 may receive a trigger frame for enabling sharing of the TxOP from the first AP. The trigger frame may carry allocation information, and the non-AP STA 122 may determine the sub-bandwidth portion and the allocated duration based on the allocation information. In a specific example, the trigger frame may be implemented as a MU-RTS TXS trigger frame.

In some alternative embodiments, after receiving the trigger frame for enabling sharing of the TxOP from the first AP, the second AP 12 may transmit a response frame associated with the trigger frame to the first AP. The response frame may be associated with sub-bandwidth portion of the bandwidth allocated to the second AP 112 for accessing the TxOP. In order to determine the sub-bandwidth portion of the bandwidth allocated to the second AP 112 for accessing the TxOP, the non-AP STA 122 may receive the response frame from the second AP 112. In a specific example, the trigger frame may be implemented as a MU-RTS TXS trigger frame and the response frame may be a CTS frame.

In some implementations, the response frame may be transmitted on the sub-bandwidth portion or on a primary channel of the second AP 112 on the TxOP. For example, based on the resource for the CTS transmission, the non-AP STA 122 may determine the resource allocation for the second AP 112. Alternatively or additionally, the response frame may carry an indication of the sub-bandwidth portion of the bandwidth allocated to the second AP 112 and/or an indication of a primary channel of the second AP 112 on the TxOP. For example, based on the information carried in the CTS frame, the non-AP STA 122 may determine the resource allocation for the second AP 112.

In some embodiments, the second AP 112 may determine a primary channel of the second AP 112 on the TxOP. For example, the second AP 112 may determine the primary channel of the second AP 112 during the allocated TxOP duration based on the allocation information received from the first AP. If the determined primary channel is different from a reference primary channel, the second AP 112 may switch from the reference primary channel to the determined primary channel. When the communication terminates, the second AP 112 may switch back from the determine primary channel to the reference primary channel. Similarly, the non-AP STA 122 may determine a primary channel of the second AP 112 on the TxOP. For example, the non-AP STA 122 may determine the primary channel of the second AP 112 during the allocated TxOP duration based on the trigger frame received from the first AP, or based on the response frame or other frames received from the second AP 112. If the determined primary channel is different from a reference primary channel, the non-AP STA 122 may switch from the reference primary channel to the determined primary channel. When the communication terminates, the non-AP STA 122 may switch back from the determine primary channel to the reference primary channel. In some examples, the non-AP STA 122 and the second AP 112 may perform channel switching concurrently.

In some embodiments, the non-AP STA 122 may receive, from the first AP, an indication indicative of a switching delay of switching from the reference primary channel to the primary channel of the second AP 112 on the TxOP and switching back from the primary channel of the second AP 112 on the TxOP to the reference primary channel.

In some embodiments, the non-AP STA 122 may receive, from the first AP, a trigger frame for enabling sharing of the TxOP. The trigger frame may include a field indicative of at least one channel within the sub-bandwidth portion. The non-AP STA 122 may determine a primary channel of the second AP 112 on the TxOP as a first one or a last one among the at least one channel indicated in the field. The trigger frame may be a MU-RTS TXS trigger frame.

Alternatively or additionally, the non-AP STA 122 and the second AP 112 may be NPCA capable and have NPCA enabled. If the sub-bandwidth portion includes the reference primary channel, the primary channel of the second AP 112 on the TxOP may be a reference primary channel of the second AP 112. If the sub-bandwidth portion includes the NPCA primary channel, the primary channel of the second AP 112 on the TxOP may be a NPCA primary channel of the second AP 112.

Alternatively or additionally, the non-AP STA 122 may receive, from the first AP, a trigger frame for enabling sharing of the TxOP. The trigger frame may include at least one bit for indicating a primary channel of the second AP 112 on the TxOP. The trigger frame may be a MU-RTS TXS trigger frame.

In some implementations, the non-AP STA 122 and the second AP 112 may be NPCA capable and have NPCA enabled. The at least one bit may include one bit. If the one bit has a first value, the primary channel of the second AP 112 on the TxOP is a reference primary channel of the second AP 112. If the one bit has a second value, the primary channel of the second AP 112 on the TxOP is a NPCA primary channel of the second AP 112.

In some implementations, the non-AP STA 122 and the second AP 112 may be NPCA capable and have NPCA enabled. The sub-bandwidth portion may include at least one channel, and at least one bit may include a bitmap indicating the primary channel among the at least one channel.

In some implementations, the non-AP STA 122 and the second AP 112 may be NPCA capable and have NPCA enabled. The sub-bandwidth portion may include at least one channel, and at least one bit may include an indication of an offset from a first one among the at least one channel indicated in the second field to the primary channel.

In some implementations, the non-AP STA 122 and the second AP 112 may be NPCA capable and have NPCA enabled. The sub-bandwidth portion may include at least one channel, and at least one bit may include an indication of an offset from a last one among the at least one channel indicated in the second field to the primary channel.

The first AP may act as a sharing AP, and the second AP 112 acts as a shared AP, wherein the non-AP STA 122 is a non-AP station.

Hereinbefore, some embodiments of TxOP sharing through frequency domain splitting are described in general terms. Hereinafter, some specific implementations of the TxOP sharing through frequency domain splitting will be further detailed in regard to various specific aspects.:

The first specific aspect relates to the signaling for triggering and enabling TxOP sharing through frequency domain splitting. Example signaling for triggering and enabling TxOP sharing through frequency domain splitting may include the first trigger frame (e.g., an ICF) for indicating the sharing AP's intention to share a TxOP, the first response frame (e.g., a CFR frame) for the responding APs requesting resource allocation on the TxOP (or requesting access to the TxOP), and the second triggering frame (e.g., MU-RTS TXS trigger frame) for resource allocation and enabling sharing of the TxOP.

In some embodiments, a sharing AP may indicate the TxOP bandwidth that it intends to share within the Common Info Subfield and/or User Info subfield of the related ICF trigger frame. In some implementations, the ICF trigger frame may be implemented as an Ultra High Reliability (UHR) variant Buffer Status Report Polling (BSRP) Trigger Frame. Other frame formats for the ICF trigger frame are also possible. With the ICF trigger frame, the process of TxOP sharing through frequency domain splitting may be triggered.

In some embodiments, a coordinating AP includes in its response to the sharing AP's ICF trigger frame, the (minimum) amount of bandwidth it would need to adequately serve its traffic when using the shared TxOP. The response frame may be implemented as an UHR variant Multi-User Block Acknowledgment (MU-BA) frame. Upon receiving this information, the sharing AP may have a better understanding of how to best split the TxOP among shared APs. For example, based on the responses from the coordinating APs, the sharing AP may determine the order in which the TxOP is allocated to the coordinating APs. In a more specific example, if the sharing AP (e.g., AP1) receives response messages from coordinating APs (e.g., AP2, AP3, and AP4) indicating their resource allocation requests, AP1 may decide to share the TxOP first with AP3, then AP2 and then AP4; and if the TxOP can only serve two APs at the same time, only AP3 and AP2 will be served as shared APs, and the order of the shared APs is AP3 ranking first and AP2 ranking second. In addition, based on the responses from the coordinating APs, the sharing AP may determine how the TxOP bandwidth should be split among the shared APs. For instance, the sharing AP may decide to share a portion of its TxOP with a specific subset of its coordinated APs simultaneously and split the TxOP bandwidth among them based on their requested bandwidths.

In some embodiments, the sharing AP may transmit the MU-RTS TXS trigger frame to the shared AP(s) to indicate the shared resources and specific assignments for each shared AP. In some implementations, the User Info field in the MU-RTS TXS trigger frame may indicate a list of the AP IDs of the shared APs to which the sharing AP intends to allocate its TxOP. This for example may be implemented by having a dedicated EHT User Info field for each shared AP in the order in which it will use the shared TxOP. In one option, when the shared APs and their associated non-AP STA are NPCA-capable, and NPCA is enabled, the TxOP could be shared with at most two shared APs, where one shared AP uses the reference primary channel and the other uses the NPCA primary channel.

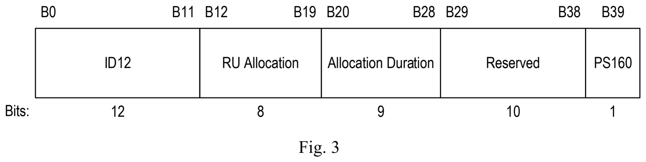

The MU-RTS TXS trigger frame may include dedicated information for each shared AP. Fig. 3 illustrates an example of a User Info field for each shared AP in a trigger frame for resource allocation according to some embodiments of the present disclosure. In an example, the User Info field may be implemented as an EHT variant User Info field format. Other frame formats are also possible. As shown in Fig. 3, the ID12 field may contain the ID of the shared AP, the resource unit (RU) allocation field may indicate the channels that the shared AP can use, and the Allocation duration field may indicate the length of time that the shared AP can use the RUs indicated in the RU allocation field. The length of the allocated duration may start a Short Interframe Space (SIFS) after the shared AP's CTS response. In some implementations, the length of the allocated duration may include the TxOP return frame. Alternatively, the length of the allocated duration does not include the TxOP return frame. In some embodiments, if the order of the shared APs is AP3 ranking first and AP2 ranking second, then the User Info field with the AP ID related to AP3 will be located before the User Info field with the AP ID related to AP2 in the MU-RTS TXS trigger frame.

In some embodiments, the RU allocation field may indicate the portion of the bandwidth associated with the shared TxOP and associated with the AP ID of the shared AP contained in the ID12 field of the same User Info field. In alternative embodiments, the TxOP bandwidth allocated to a shared TxOP and associated with the AP ID of the shared AP contained in the ID12 field of the same User Info field may be carried in a new resource allocation field (e.g., by reinterpreting some of the reserved bits between B29 and B38) included in the User Info field of the MU-RTS TXS trigger frame. As used hereafter, the term "resource allocation field" may refer to the RU allocation field or the new resource allocation field to indicate the TxOP bandwidth allocated to a shared TxOP and associated with the AP ID of the shared AP contained in the ID12 field of the same User Info field. The resource allocation values in the resource allocation field for the shared AP may be determined by the shared AP. In some implementations, the resource allocations for all shared APs granted concurrent TxOP access during a given period may be allocated orthogonal portions of the TxOP's bandwidth. Alternatively or additionally, during any given period, the sum of resource allocations for all shared APs granted concurrent TxOP access may not exceed the total TxOP bandwidth. Alternatively or additionally, when one or more shared APs and their associated non-AP STAs are NPCA-capable, and NPCA is enabled, the resource allocation is done in such a way that one of the shared APs operates on the reference primary channel and the other operated on the NPCA primary channel.

In some embodiments, the resource allocation values may be chosen such that all shared APs granted concurrent TxOP access during a given period are allocated orthogonal and equal amounts of the TxOP's bandwidth. For example, K shared APs each get (TxOP bandwidth)/K of the total TxOP bandwidth).

In some embodiments, the Allocation Duration field may specify how long a shared AP may use the resources indicated in the resource allocation field. In some implementations, the value in Allocation Duration field may be the same among all the shared APs that concurrently use the shared TxOP using orthogonal frequency resources. For example, this value may refer to the first resource that the related shared AP can use which starts a SIFS (or a predefined amount of time) after the last shared AP's among the group of shared APs that concurrently use the shared TxOP using orthogonal frequency resources has transmitted its own CTS response. In another example, the value in Allocation Duration field may refer to the first resource that the related shared AP can use which starts a SIFS (or a predefined amount of time) after the shared related AP's CTS response. The predefined amount of time may be additionally signaled within the MU-RTS TXS trigger frame.

In some alternative implementations, the value in Allocation Duration field may be different among all the shared APs that concurrently use the shared TxOP using orthogonal frequency resources, and it refer to the first resource that the related shared AP can use starting a SIFS (or a predefined amount of time) after the shared related AP's CTS response. The predefined amount of time may be additionally signaled within the MU-RTS TXS trigger frame.

In some embodiments, the shared AP may designate the channel that a shared AP uses as its primary channel during its shared TxOP allocation. In some implementations, the channel that a shared AP uses as its primary channel during its shared TxOP allocation may be implicitly indicated through the resource allocation field, and the primary channel during its shared TxOP allocation may be either the first or last channel of the shared AP's resource allocation.

In some implementations, the channel that a shared AP uses as its primary channel during its shared TxOP allocation may be implicitly indicated through the resource allocation field, and may be either the shared AP's reference primary channel or NPCA primary channel (if NPCA is enabled), depending on which is within the shared AP's resource allocation.

In some implementations, the channel that a shared AP uses as its primary channel during its shared TxOP allocation may be specified by some of the bits between B29 and B38 of the User Info field (as indicated in Fig. 3). In some examples, the explicit indication may be a single bit indicating whether to use the reference primary channel or NPCA primary channel as the shared AP's primary channel during its shared TxOP allocation. In some alternative examples, the explicit indication may be a group of bits carrying a bitmap indicating the specific channel in the resource allocation to use as the primary channel during the shared AP' shared TxOP allocation. In some alternative examples, the explicit indication may be a group of bits specifying an offset from either the first or last channel in the resource allocation indicating the channel to use as the primary channel during the shared AP' shared TxOP allocation. It should be understood that this explicit indication could be also carried within a new dedicated element within the User Info field in the MU-RTS TXS trigger frame.

In some embodiments, the MU-RTS TXS trigger frame carries a specific indication of the switching delay that a shared AP incurs when switching from the reference primary channel to another primary channel (e.g., NPCA primary channel) for its shared TxOP allocation and when switching back. This indication could be carried by reinterpreting the reserved bits (between B29 and B38) of the User Info field (as indicated in Fig. 3) or by a new dedicated element within the User Info field (i.e., a single indication for switching delay) or two new dedicated elements within the User Info field (i.e., an indication for switching delay from reference primary channel to another primary channel and an indication for switching delay from another primary channel to the reference primary channel).

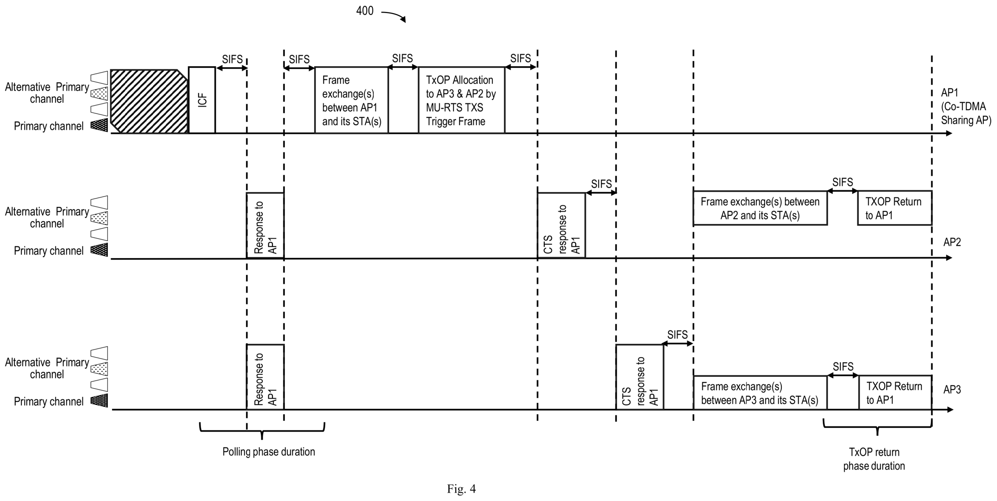

The second specific aspect relates to the CTS responses from shared APs to respond to the MU-RTS TXS trigger frame from the sharing AP. In some embodiments, each shared AP addressed in the MU-RTS TXS trigger frame transmits a CTS response on shared AP's primary channel for its shared TxOP allocation sequentially, e.g., in the order of their User Info fields, AP ID values, lowest to highest resource allocation, etc. This option is illustrated in Fig. 4, where the shared APs transmit the CTS responses in a sequential manner using the bandwidth associated with the TxOP.

Fig. 4 illustrates a first example of a process 400 of TxOP sharing through frequency domain splitting according to some embodiments of the present disclosure. The process 400 in Fig. 4 involves AP1, AP2 and AP3. The AP1, AP2 and AP3 may be implemented as the first AP 111, the second AP 112, and the third AP 113 in Fig. 1A. AP1, AP2 and AP3 are coordinating APs, and AP1 serves as a sharing AP by having acquired a TxOP over a wideband. After requesting coordinating APs (including AP2 and AP3) through an ICF about whether they would like to utilize part of its TxOP, which otherwise would remain unused, AP1 first completes its own frame exchange(s) with its associated non-AP STA(s) and then shares its TxOP with both AP2 and AP3 by sending them a MU-RTS TXS trigger frame where it splits its TxOP bandwidth between them. After providing a CTS response to AP1 in sequence, AP2 and AP3 will start operating in orthogonal parts of the TxOP bandwidth. AP2 and AP3 will each designate a primary channel for their BSSs from within the bandwidth that they are allocated for the duration of the allocation. At the end of the allocation or upon ending their allocation early (by sending a TxOP return message to AP1), the shared APs and their associated non-AP STAs will switch back to the original primary channel and bandwidth (if different from their original ones). In the example shown in Fig. 4, the AP2's primary channel during the shared TxOP allocation is different from the reference primary channel, and AP2 and its associated non-AP STAs will perform the channel switching at the beginning and switch back at end of the allocation.

In some alternative embodiments, all shared APs addressed in the MU-RTS TXS trigger frame transmit a CTS response concurrently one SIFS after the MU-RTS TXS trigger frame is received. In some implementations, the bandwidth for the shared APs transmitting these CTS responses may be equivalent to the all bandwidth associated with the TxOP, which the sharing AP may indicate in the ICF trigger frame or may be retrieved intrinsically from the sharing AP.

In some implementations, the bandwidth for a shared AP transmitting the CTS response may be explicitly indicated in in the User Info field in the MU-RTS TXS trigger frame. In this case, the MU-RTS TXS trigger frame may need to contain an intermediate frame to check sequence (FCS) and padding to allow all shared APs to move to their respective resource allocations in time to send their CTS responses concurrently. In one option, the shared AP would use the primary channel of its TxOP allocation to transmit its CTS response.

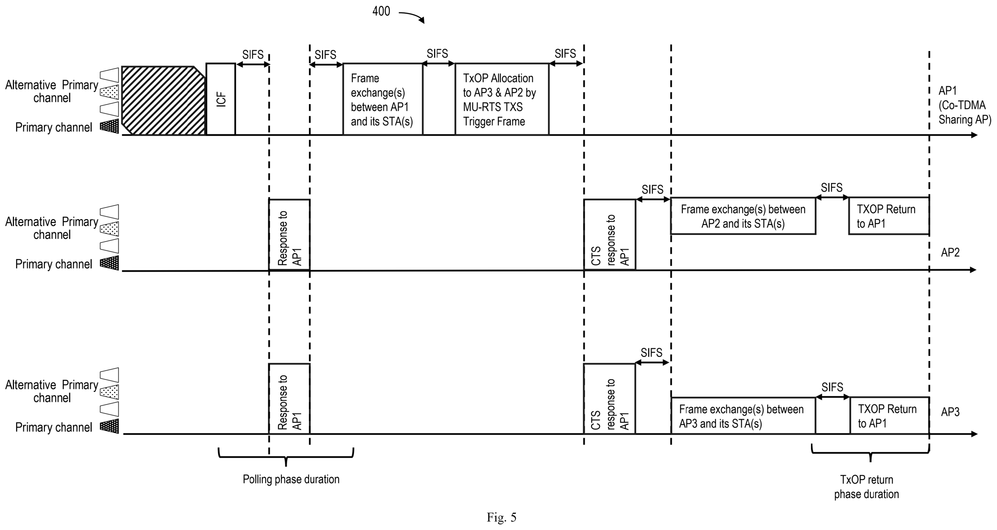

Fig. 5 illustrates a first example of a process 500 of TxOP sharing through frequency domain splitting according to some embodiments of the present disclosure. The process 500 in Fig. 5 involves AP1, AP2 and AP3. The AP1, AP2 and AP3 may be implemented as the first AP 111, the second AP 112, and the third AP 113 in Fig. 1A. AP1, AP2 and AP3 are coordinating APs, and AP1 serves as a sharing AP by having acquired a TxOP over a wideband. After requesting coordinating APs (including AP2 and AP3) through an ICF about whether they would like to utilize part of its TxOP, which otherwise would remain unused, AP1 first completes its own frame exchange(s) with its associated non-AP STA(s) and then shares its TxOP with both AP2 and AP3 by sending them a MU-RTS TXS trigger frame where it splits its TxOP bandwidth between them. After receiving the MU-RTS TXS trigger frame, AP2 and AP3 may provide a CTS response to AP1 concurrently using the allocated orthogonal parts of the TxOP bandwidth. Then AP2 and AP3 will start operating in the allocated orthogonal parts of the TxOP bandwidth. At the end of the allocation or upon ending their allocation early (by sending a TxOP return message to AP1), the shared APs and their associated non-AP STAs will switch back to the original primary channel and bandwidth (if different from their original ones).

The third specific aspect relates to the related behaviors of a shared AP and its associated non-AP STAs, including the bandwidth switch within the shared TxOP.

In some embodiments, a non-AP STA may retrieve information about its associated AP's shared TxOP allocation directly from the MU-RTS TXS trigger frame sent by the sharing AP. For example, the non-AP STA may obtain the resource allocation for its associated AP based on the resource allocation field in the User Info field of the MU-RTS TXS trigger frame carrying the AP ID of its associated AP in the ID12 field. The non-AP STA may utilize the information retrieved from the MU-RTS TXS trigger frame to understand where they should operate within the shared TxOP (where to transmit and receive in frequency domain). If the primary channel of its' associated TxOP allocation is different from the reference primary channel, the related behaviors of a shared AP and its associated non-AP STAs may include NPCA switching or switching to another primary channel. Both the shared AP and its associated non-AP STAs are assumed to switch at the same time based on their switching capabilities.

In some embodiments, a non-AP STA may retrieve information about its associated AP's shared TxOP allocation from the CTS response that its associated AP transmits in response to the sharing AP's MU-RTS TXS trigger frame. In some implementations, the CTS response may indicate the resource allocation or bandwidth portion that the shared AP will be using within the shared TxOP. Alternatively or additionally, the CTS response may indicate the primary channel that will be used within the shared TxOP by the shared AP. The non-AP STA may utilize the information retrieved from the CTS response to understand where they should operate within the shared TxOP (where to transmit and receive in frequency domain). If the primary channel of its' associated TxOP allocation is different from the reference primary channel, the related behaviors of a shared AP and its associated non-AP STAs may include NPCA switching or switching to another primary channel. Both the shared AP and its associated non-AP STAs are assumed to switch at the same time based on their switching capabilities.

The fourth specific aspect relates to the methods for shared AP(s) to return TxOP allocation to the sharing AP. In some embodiments, a sharing AP shall assume that all shared APs concurrently using its TxOP on orthogonal frequency resources during the same period will terminate their use of the TxOP when their Allocation Durations expire. Based on this assumption, the sharing AP may select the shared APs' Allocation Durations so that all but one shared AP terminate their use of the TxOP before the remaining shared AP does. The remaining shared AP then gets access to the TxOP's entire bandwidth on which to transmit a "TxOP return" frame. In some implementations, the allocation duration may not include the time necessary for the TxOP return. In other words, the allocation duration may correspond to the maximum usable shared TxOP length.

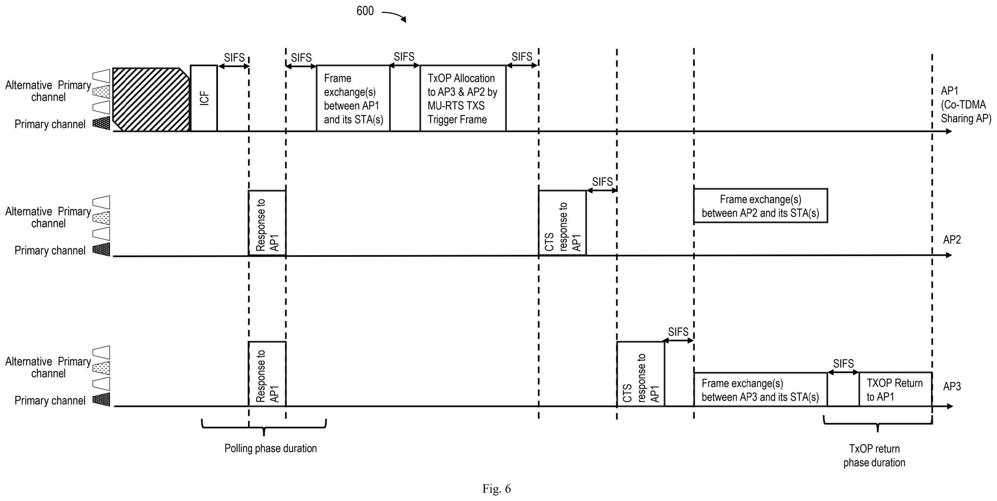

In some implementations, the remaining shared AP that would transmit a "TxOP return" frame at the end of its Allocation Duration is the one operating on the reference primary channel. Reference is made to Fig. 6, which illustrates a third example of a process 600 of TxOP sharing through frequency domain splitting according to some embodiments of the present disclosure. The process 600 in Fig. 6 involves AP1, AP2 and AP3. The AP1, AP2 and AP3 may be implemented as the first AP 111, the second AP 112, and the third AP 113 in Fig. 1A. AP1, AP2 and AP3 are coordinating APs, and AP1 serves as a sharing AP by having acquired a TxOP over a wide bandwidth. After requesting coordinating APs (including AP2 and AP3) through an ICF about whether they would like to utilize part of its TxOP, which otherwise would remain unused, AP1 first completes its own frame exchange(s) with its associated non-AP STA(s) and then shares its TxOP with both AP2 and AP3 by sending them a MU-RTS TXS trigger frame where it splits its TxOP bandwidth between them. After providing a CTS response to AP1 in sequence, AP2 and AP3 will start operating in orthogonal parts of the TxOP bandwidth. AP2 and AP3 will each designate a primary channel for their BSSs from within the bandwidth that they are allocated for the duration of the allocation. At the end of the allocation, the shared APs and their associated non-AP STAs will switch back to the original primary channel and bandwidth (if different from their original ones). In the process 600, AP1 shall assume that AP2 and AP3 will terminate their use of the TxOP when their Allocation Durations expire. Based on this assumption, the AP1 may select the shared APs' Allocation Durations so that AP2 terminates its use of the TxOP before AP3 does. AP3 then gets access to the TxOP's entire bandwidth on which to transmit a "TxOP return" frame. AP2 would not transmit a "TxOP return" frame.

In some implementations, the remaining shared AP that would transmit a "TxOP return" frame at the end of its Allocation Duration may be the shared AP assigned the longest Allocation Duration (i.e., the one to terminate its use of the TxOP last). In some examples, the remaining shared AP can be any of the shared APs, and it is specified in the MU-RTS TXS trigger frame.

In some embodiments, a sharing AP shall assume that the shared APs always return their shared TxOP allocations before the end of their Allocation Duration. In the examples shown in Figs. 4 and 5, both AP2 and AP3 transmit a "TxOP return" frame before the end of their Allocation Duration. In some implantations, the allocation duration may also include the time necessary for the TxOP return. In other words, the allocation duration may correspond to the maximum usable shared TxOP length plus the time necessary for the TxOP return.

In some embodiments, a sharing AP shall assume that the TxOP is terminated upon the reception of the latest TxOP return frame from one of the sharing APs that were concurrently using the shared TxOP through orthogonal frequency resources. In one option this is expected to follow the order indicated in MU-RTS TXS trigger frame or can follow a separate order (e.g., based on actual use of the shared AP and its associated non-AP STAs). For example, the TxOP return will be provided by only one shared AP, which should be expected to be the last shared AP in the list of shared APs granted concurrent TxOP access during a given period. In a more specific example, if AP2 is ranked last in the list of shared APs granted concurrent TxOP access, AP2 will be the one transmitting the TxOP return as the last AP in the shared AP list.

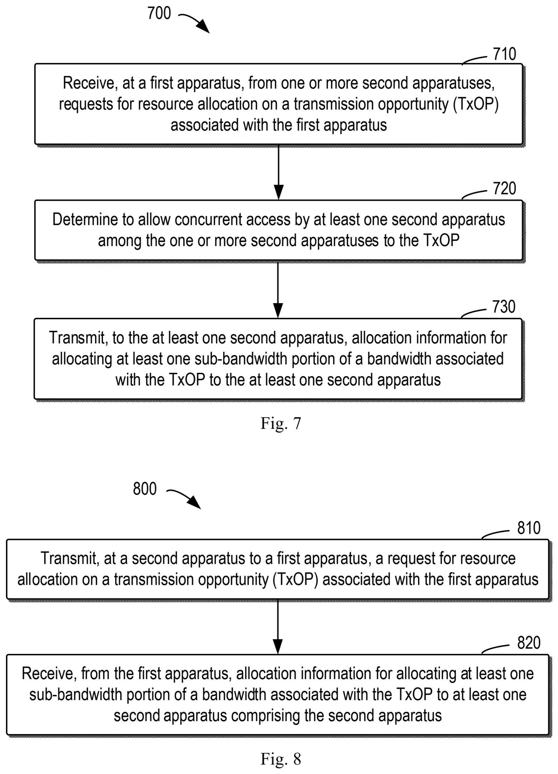

Fig. 7 shows a flowchart of an example method 700 implemented at an apparatus in accordance with some embodiments of the present disclosure. For the purpose of discussion, the method 700 will be described from the perspective of a first apparatus (e.g., the first AP 111 in Fig. 1A).

At block 710, the first apparatus receives, from one or more second apparatuses, requests for resource allocation on a transmission opportunity (TxOP) associated with the first apparatus. At block 720, the first apparatus determines to allow concurrent access by at least one second apparatus among the one or more second apparatuses to the TxOP. At block 730, the first apparatus transmits, to the at least one second apparatus, allocation information for allocating at least one sub-bandwidth portion of a bandwidth associated with the TxOP to the at least one second apparatus.

In some embodiments, the first apparatus may transmit, to a set of second apparatuses comprising the one or more second apparatuses, an indication of an intention to share the TxOP. The indication of the intention is carried in a first trigger frame, the requests are carried in first response frames associated with the first trigger frame. The first trigger frame comprises at least one of an indication of the bandwidth or an indication of a maximum duration length of the TxOP for sharing carried in at least one of the following: a Common Info subfield, or a User Info subfield.

In some embodiments, the requests comprise at least one of the following: respective resource amount requirements of second apparatuses in the one or more second apparatuses; or respective access category (AC) classes of second apparatuses in the one or more second apparatuses.

In some embodiments, in order to determine to allow concurrent access by the at least one second apparatus to the TxOP, the first apparatus may determine an order of second apparatuses in the one or more second apparatuses based on the requests; determine the at least one second apparatus from the one or more second apparatuses based on the order; and determine respective portions of the bandwidth associated with the TxOP to be allocated to the at least one second apparatus.

In some embodiments, a sum of the at least one sub-bandwidth portion is no larger than the bandwidth associated with the TxOP to be allocated to the at least one second apparatus.

In some embodiments, the at least one sub-bandwidth portion are orthogonal with each other.

In some embodiments, the at least one sub-bandwidth portion have equal bandwidth amounts.

In some embodiments, the at least one second apparatus comprises two second apparatuses which are non-primary channel access (NPCA) capable and have NPCA enabled. The first apparatus may allocate a NPCA primary channel of the two second apparatuses to a second one of the two second apparatuses as a primary channel of the second second apparatus on the TxOP. A reference primary channel of the two second apparatuses is used as a primary channel of the first second apparatus on the TxOP by a first one of the two second apparatuses.

In some embodiments, the allocation information comprises at least one identifier (ID) associated with the at least one second apparatus.

In some embodiments, the allocation information is carried in a second trigger frame comprising at least one information field. An information field of the at least one information field carries respective information for allocating a respective sub-bandwidth portion of the bandwidth to a respective second apparatus of the at least one second apparatus.

In some embodiments, the information field comprises at least one of the following: a first field carrying an ID of the respective second apparatus; a second field carrying an indication of the respective sub-bandwidth portion; and a third field carrying an indication of an allocated duration for the respective second apparatus on the respective sub-bandwidth portion. In some embodiments, the second trigger frame is a multi-user request to send (MU-RTS) transmission (TXS) trigger frame. In some embodiments, the information field is a User Info field. In some embodiments, the first field is an ID field. In some embodiments, the second field is a resource unit (RU) allocation field or a resource allocation field different from the RU allocation field. In some embodiments, the third field is an allocation duration field.

In some embodiments, the respective sub-bandwidth portion comprises at least one channel, and wherein a primary channel of the respective second apparatus on the TxOP is one of the following: a first one among the at least one channel indicated in the second field; or a last one among the at least one channel indicated in the second field.

In some embodiments, the respective second apparatus is NPCA capable and has NPCA enabled, and wherein a primary channel of the respective second apparatus on the TxOP is one of the following: a reference primary channel of the respective second apparatus, wherein the respective sub-bandwidth portion comprises the reference primary channel; or a NPCA primary channel of the respective second apparatus, wherein the respective sub-bandwidth portion comprises the NPCA primary channel.

In some embodiments, the information field further comprises at least one bit for indicating a primary channel of the respective second apparatus on the TxOP.

In some embodiments, the respective second apparatus is NPCA capable and has NPCA enabled, the at least one bit comprises one bit, and the primary channel is one of the following: a reference primary channel of the respective second apparatus, wherein the one bit has a first value; or a NPCA primary channel of the respective second apparatus, wherein the one bit has a second value.

In some embodiments, the respective second apparatus may be NPCA capable and have NPCA enabled, the respective sub-bandwidth portion comprises at least one channel, and at least one bit comprises a bitmap indicating the primary channel among the at least one channel.

In some embodiments, the respective second apparatus may be NPCA capable and have NPCA enabled, the respective sub-bandwidth portion comprises at least one channel, and at least one bit comprises an indication of an offset from a first one among the at least one channel indicated in the second field to the primary channel.

In some embodiments, the respective second apparatus may be NPCA capable and have NPCA enabled, the respective sub-bandwidth portion comprises at least one channel, and at least one bit comprises an indication of an offset from a last one among the at least one channel indicated in the second field to the primary channel.

In some embodiments, the information field further comprises: an indication indicative of a switching delay of the respective second apparatus switching from a reference primary channel to a primary channel of the respective second apparatus on the TxOP and switching back from the primary channel of the second apparatus on the TxOP to the reference primary channel.

In some embodiments, the first apparatus may determine an order of second apparatuses in the one or more second apparatuses based on the requests, wherein an order of the at least one information field within the second trigger frame corresponds to the order of the at least one second apparatus.

In some embodiments, an allocated duration for the respective second apparatus on the respective sub-bandwidth portion starts from a time interval after receiving a second response frame associated with the allocation information from a last second apparatus in an order of the at least one second apparatus. The time interval is a short interframe space (SIFS) or is indicated in the second trigger frame.

In some embodiments, an allocated duration for the respective second apparatus on the respective sub-bandwidth portion starts from a time interval after receiving a second response frame associated with the allocation information from the respective second apparatus. The time interval is a short interframe space (SIFS) or is indicated in the second trigger frame.

In some embodiments, the allocation information comprises allocated durations for the at least one second apparatus on the at least one sub-bandwidth portion, wherein the allocated durations for the at least one second apparatus are different.

In some embodiments, the allocation information comprises allocated durations for the at least one second apparatus on the at least one sub-bandwidth portion, wherein the allocated durations for the at least one second apparatus are same.

In some embodiments, the first apparatus may receive, from the at least one second apparatus, at least one second response frame associated with the allocation information.

In some embodiments, each of the at least one second response frame occupies the entire bandwidth associated with the TxOP.

In some embodiments, each of the at least one second response frame is received on a respective sub-bandwidth portion of the bandwidth allocated to a respective second apparatus of the at least one second apparatus.

In some embodiments, each of the at least one second response frame is received on a primary channel of a respective second apparatus of the at least one second apparatus on the TxOP.

In some embodiments, the at least one second response frame are concurrently received after one SIFS from transmitting the allocation information.

In some embodiments, the at least one second response frame are received sequentially in an order of at least one information field associated with the at least one second apparatus in a second trigger frame carrying the allocation information.

In some embodiments, the at least one second response frame are received sequentially in an order of values of at least one ID associated with the at least one second apparatus.

In some embodiments, the at least one second response frame are received sequentially in an order of frequency domain locations of the at least one sub-bandwidth portion allocated to the at least one second apparatus.

In some embodiments, each of the at least one second response frame carries at least one of the following: an indication of a respective sub-bandwidth portion of the bandwidth allocated to a respective second apparatus of the at least one second apparatus; or an indication of a primary channel of a respective second apparatus of the at least one second apparatus on the TxOP.

In some embodiments, the first apparatus may receive a TxOP return frame from one among the at least one second apparatus, wherein the TxOP return frame occupies the entire bandwidth associated with the TxOP. In some embodiments, the second apparatus from which the TxOP return frame is received is NPCA capable and has NPCA enabled, and wherein a primary channel of the second apparatus on the TxOP is a reference primary channel of the second apparatus.

In some embodiments, the first apparatus may receive a TxOP return frame from one among the at least one second apparatus. The at least one second apparatus is NPCA capable and has NPCA enabled. A reference primary channel of the at least one second apparatus is used as a primary channel of the second apparatus from which the TxOP return frame is received, and the TxOP return frame is received on the reference primary channel of the at least one second apparatus.

In some embodiments, the first apparatus may transmit, to the second apparatus, an indication indicative of transmitting the TxOP return frame after expiry of the allocated duration for the second apparatus.

In some embodiments, the second apparatus has a longest allocated duration on a respective sub-bandwidth portion of the bandwidth among the at least one second apparatus.

In some embodiments, the first apparatus may receive at least one TxOP return frame from the at least one second apparatus, wherein a respective TxOP return frame of the at least one TxOP return frame is received from a respective second apparatus of the at least one second apparatus before expiry of an allocated duration for the respective second apparatus, wherein the allocated duration for the respective second apparatus comprises a maximum available duration for traffic on the respective second apparatus and a duration for the respective TxOP return frame.

In some embodiments, the first apparatus may receive a TxOP return frame from one among the at least one second apparatus, wherein the second apparatus is a last second apparatus in an order of the at least one second apparatus.

In some embodiments, the first apparatus acts as a sharing access point (AP) device, and the at least one second apparatus act as at least one shared AP device

Fig. 8 shows a flowchart of an example method 800 implemented at an apparatus in accordance with some embodiments of the present disclosure. For the purpose of discussion, the method 800 will be described from the perspective of a second apparatus (e.g., the second AP 112 or the second AP 113 in Fig. 1A).

At block 810, the second apparatus transmits, to a first apparatus, a request for resource allocation on a transmission opportunity (TxOP) associated with the first apparatus. At block 820, the second apparatus receives, from the first apparatus, allocation information for allocating at least one sub-bandwidth portion of a bandwidth associated with the TxOP to at least one second apparatus comprising the second apparatus.

In some embodiments, the second apparatus may receive, from the first apparatus, an indication of an intention to share the TxOP, wherein the indication of the intention is carried in a first trigger frame. The request is carried in a first response frame associated with the first trigger frame. The first trigger frame comprises at least one of an indication of the bandwidth or an indication of a maximum duration length of the TxOP for sharing carried in at least one of the following: a Common Info subfield, or a User Info subfield.

In some embodiments, the request comprises at least one of the following: a resource amount requirement of the second apparatus; or an access category (AC) class of the second apparatus.

In some embodiments, a sum of the at least one sub-bandwidth portion is no larger than the bandwidth.

In some embodiments, the at least one sub-bandwidth portion are orthogonal with each other.

In some embodiments, the at least one sub-bandwidth portion have equal bandwidth amounts.

In some embodiments, the second apparatus may be NPCA capable and have NPCA enabled, wherein a primary channel of the second apparatus on the TxOP is one of the following: a reference primary channel of the second apparatus; or a NPCA primary channel of the second apparatus.

In some embodiments, the allocation information comprises at least one identifier (ID) associated with the at least one second apparatus.

In some embodiments, the allocation information is carried in a second trigger frame comprising at least one information field. An information field of the at least one information field carries respective information for allocating a respective sub-bandwidth portion of the bandwidth to the second apparatus.

In some embodiments, the information field comprises at least one of the following: a first field carrying an ID of the second apparatus; a second field carrying an indication of the respective sub-bandwidth portion; and a third field carrying an indication of an allocated duration for the second apparatus on the respective sub-bandwidth portion. The second trigger frame is a multi-user request to send (MU-RTS) transmission (TXS) trigger frame, the information field is a User Info field, the first field is an ID field, the second field is a resource unit (RU) allocation field or a resource allocation field different from the RU allocation field; the third field is an allocation duration field.

In some embodiments, the respective sub-bandwidth portion comprises at least one channel. A primary channel of the second apparatus on the TxOP is one of the following: a first one among the at least one channel indicated in the second field; or a last one among the at least one channel indicated in the second field.

In some embodiments, the second apparatus may be NPCA capable and have NPCA enabled. A primary channel of the second apparatus on the TxOP is one of the following: a reference primary channel of the second apparatus, wherein the respective sub-bandwidth portion comprises the reference primary channel; or a NPCA primary channel of the second apparatus, wherein the respective sub-bandwidth portion comprises the NPCA primary channel.

In some embodiments, the information field further comprises at least one bit for indicating a primary channel of the second apparatus on the TxOP.

In some embodiments, the second apparatus may be NPCA capable and have NPCA enabled, the at least one bit comprises one bit, and the primary channel is one of the following: a reference primary channel of the second apparatus, wherein the one bit has a first value; or a NPCA primary channel of the second apparatus, wherein the one bit has a second value.

In some embodiments, the second apparatus may be NPCA capable and have NPCA enabled, the respective sub-bandwidth portion comprises at least one channel, and at least one bit comprises one of the following: a bitmap indicating the primary channel among the at least one channel; an indication of an offset from a first one among the at least one channel indicated in the second field to the primary channel; or an indication of an offset from a last one among the at least one channel indicated in the second field to the primary channel.

In some embodiments, the information field further comprises: an indication indicative of a switching delay of the second apparatus switching from a reference primary channel to a primary channel of the second apparatus on the TxOP and switching back from the primary channel of the second apparatus on the TxOP to the reference primary channel.

In some embodiments, an order of the at least one information field within the second trigger frame corresponds to an order of the at least one second apparatus.

In some embodiments, an allocated duration for the second apparatus on the respective sub-bandwidth portion starts from a time interval after a last second apparatus in an order of the at least one second apparatus transmitting a second response frame associated with the allocation information, wherein the time interval is a short interframe space (SIFS) or is indicated in the second trigger frame.

In some embodiments, an allocated duration for the second apparatus on the respective sub-bandwidth portion starts from a time interval after the second apparatus transmitting a second response frame associated with the allocation information, wherein the time interval is a short interframe space (SIFS) or is indicated in the second trigger frame.

In some embodiments, the allocation information comprises allocated durations for the at least one second apparatus on the at least one sub-bandwidth portion, the allocated durations for the at least one second apparatus are different.

In some embodiments, the allocation information comprises allocated durations for the at least one second apparatus on the at least one sub-bandwidth portion, the allocated durations for the at least one second apparatus are same.

In some embodiments, the second apparatus may transmit, to the first apparatus, a second response frame associated with the allocation information.

In some embodiments, the second response frame occupies the entire bandwidth associated with the TxOP.

In some embodiments, the second response frame is transmitted on a respective sub-bandwidth portion of the bandwidth allocated to the second apparatus.

In some embodiments, the second response frame is transmitted on a primary channel of the second apparatus on the TxOP.

In some embodiments, the second response frame is transmitted after one SIFS from receiving the allocation information.

In some embodiments, the second response frame is transmitted based on one of the following orders: an order of at least one information field associated with the at least one second apparatus in a second trigger frame carrying the allocation information; an order of values of at least one ID associated with the at least one second apparatus; or an order of frequency domain locations of the at least one sub-bandwidth portion allocated to the at least one second apparatus.

In some embodiments, the second response frame carries at least one of the following: an indication of a respective sub-bandwidth portion of the bandwidth allocated to the second apparatus; or an indication of a primary channel of the second apparatus on the TxOP.

In some embodiments, the second apparatus may transmit, to the first apparatus, a TxOP return frame, wherein the TxOP return frame occupies the entire bandwidth associated with the TxOP. In some embodiments, the second apparatus may be NPCA capable and have NPCA enabled, and wherein a primary channel of the second apparatus on the TxOP is a reference primary channel of the second apparatus.

In some embodiments, the second apparatus may transmit, to the first apparatus, a TxOP return frame. The second apparatus is NPCA capable and has NPCA enabled. A reference primary channel of the second apparatus is used as a primary channel of the second apparatus, and the TxOP return frame is transmitted on the reference primary channel of the second apparatus

In some embodiments, the second apparatus may receive, from the first apparatus, an indication indicative of transmitting the TxOP return frame after expiry of the allocated duration for the second apparatus.

In some embodiments, the second apparatus has a longest allocated duration on a respective sub-bandwidth portion of the bandwidth among the at least one second apparatus.

In some embodiments, the second apparatus may transmit, to the first apparatus, a TxOP return frame before expiry of an allocated duration for the second apparatus on a respective sub-bandwidth portion of the bandwidth, wherein the allocated duration for the second apparatus comprises a maximum available duration for traffic on the second apparatus and a duration for the TxOP return frame.

In some embodiments, the second apparatus may transmit, to a first apparatus, a TxOP return frame, based on determining that the second apparatus is a last second apparatus in an order of the at least one second apparatus.

In some embodiments, the first apparatus acts as a sharing access point (AP) device, and the at least one second apparatus act as at least one shared AP device.

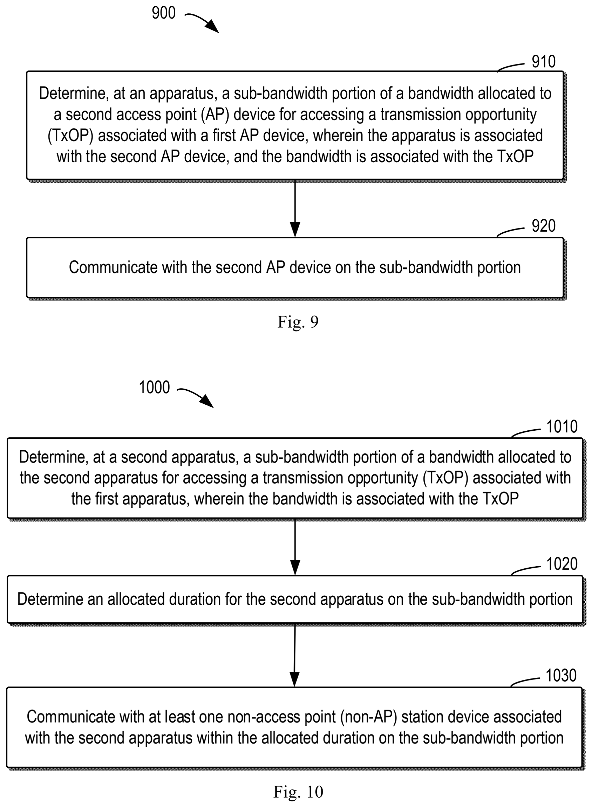

Fig. 9 shows a flowchart of an example method 900 implemented at an apparatus in accordance with some embodiments of the present disclosure. For the purpose of discussion, the method 900 will be described from the perspective of an apparatus (e.g., the non-AP STA 122 in Fig. 1A).

At block 910, the apparatus determines a sub-bandwidth portion of a bandwidth allocated to a second access point (AP) device for accessing a transmission opportunity (TxOP) associated with a first AP device, wherein the apparatus is associated with the second AP device, and the bandwidth is associated with the TxOP. At block 920, the apparatus communicates with the second AP device on the sub-bandwidth portion.

In some embodiments, the apparatus may receive, from the first AP device, a trigger frame for enabling sharing of the TxOP, wherein the trigger frame carries allocation information, and the sub-bandwidth portion is determined based on the allocation information, wherein the trigger frame is a multi-user request to send (MU-RTS) transmission (TXS) trigger frame.

In some embodiments, the apparatus mayreceive, from the second AP device, a response frame associated with a trigger frame for enabling sharing of the TxOP, wherein the sub-bandwidth portion is determined based on the response frame, wherein the trigger frame is a multi-user request to send (MU-RTS) transmission (TXS) trigger frame.

In some embodiments, the response frame is received on the sub-bandwidth portion or on a primary channel of the second AP device on the TxOP, wherein the response frame is a clear-to-send (CTS) frame.

In some embodiments, the response frame carries at least one of the following: an indication of the sub-bandwidth portion of the bandwidth allocated to the second apparatus; or an indication of a primary channel of the second apparatus on the TxOP.

In some embodiments, the apparatus may determine a primary channel of the second AP device on the TxOP; based on determining that the primary channel is different from a reference primary channel, switch from the reference primary channel to the determined primary channel; and based on determining that the communication terminates, switch back from the determine primary channel to the reference primary channel.

In some embodiments, the apparatus may receive, from the first AP device, an indication indicative of a switching delay of switching from the reference primary channel to the primary channel of the second AP device on the TxOP and switching back from the primary channel of the second AP device on the TxOP to the reference primary channel.

In some embodiments, the apparatus may receive, from the first AP device, a trigger frame for enabling sharing of the TxOP, the trigger frame comprises a field indicative of at least one channel within the sub-bandwidth portion; and determine a primary channel of the second AP device on the TxOP as one of the following: a first one among the at least one channel indicated in the field; or a last one among the at least one channel indicated in the field. The trigger frame is a multi-user request to send (MU-RTS) transmission (TXS) trigger frame.

In some embodiments, the apparatus and the second AP device may be NPCA capable and have NPCA enabled, wherein the apparatus may determine a primary channel of the second AP device on the TxOP as one of the following: a reference primary channel of the second AP device, wherein the sub-bandwidth portion comprises the reference primary channel; or a NPCA primary channel of the second AP device, wherein the sub-bandwidth portion comprises the NPCA primary channel.

In some embodiments, the apparatus may receive, from the first AP device, a trigger frame for enabling sharing of the TxOP, the trigger frame comprises at least one bit for indicating a primary channel of the second AP device on the TxOP, wherein the trigger frame is a multi-user request to send (MU-RTS) transmission (TXS) trigger frame.

In some embodiments, the apparatus and the second AP device may be NPCA capable and have NPCA enabled. The apparatus may determine a primary channel of the second AP device on the TxOP as one of the following: a reference primary channel of the second AP device, wherein the one bit has a first value; or a NPCA primary channel of the second AP device, wherein the one bit has a second value.

In some embodiments, the apparatus and the second AP device may be NPCA capable and have NPCA enabled, the sub-bandwidth portion comprises at least one channel, and at least one bit comprises one of the following: a bitmap indicating the primary channel among the at least one channel; an indication of an offset from a first one among the at least one channel indicated in the second field to the primary channel; or an indication of an offset from a last one among the at least one channel indicated in the second field to the primary channel.

In some embodiments, the first AP device acts as a sharing access point (AP) device, and the second AP device acts as a shared AP device, wherein the apparatus is a non-AP station device.

Fig. 10 shows a flowchart of an example method 1000 implemented at an apparatus in accordance with some embodiments of the present disclosure. For the purpose of discussion, the method 1000 will be described from the perspective of a second apparatus (e.g., the second AP 112 or the second AP 113 in Fig. 1A).

At block 1010, the second apparatus determines a sub-bandwidth portion of a bandwidth allocated to the second apparatus for accessing a transmission opportunity (TxOP) associated with a first apparatus, wherein the bandwidth is associated with the TxOP. At block 1020, the second apparatus determines an allocated duration for the second apparatus on the sub-bandwidth portion. At block 1030, the second apparatus communicates with at least one non-access point (non-AP) station device associated with the second apparatus within the allocated duration on the sub-bandwidth portion.

In some embodiments, the second apparatus may receive, from the first apparatus, a trigger frame for enabling sharing of the TxOP, wherein the trigger frame carries allocation information, and the sub-bandwidth portion and the allocated duration are determined based on the allocation information.

In some embodiments, the second apparatus may receive, from the first apparatus, a trigger frame for enabling sharing of the TxOP; and transmit, to the first apparatus, a response frame associated with the trigger frame, wherein the response frame is associated with sub-bandwidth portion.

In some embodiments, the second apparatus may determine a primary channel of the second apparatus on the TxOP; based on determining that the primary channel is different from a reference primary channel, switch from the reference primary channel to the determined primary channel; and based on determining that the communication with the at least one non-AP station device terminates, switch back from the determine primary channel to the reference primary channel

In some embodiments, an apparatus capable of performing any of the method 700 (for example, the first AP 111 in Fig. 1A) may comprise means for performing the respective steps of the method 700. The means may be implemented in any suitable form. For example, the means may be implemented in a circuitry or software module.

In some embodiments, the apparatus comprises: means for receiving, at a first apparatus from one or more second apparatuses, requests for resource allocation on a transmission opportunity (TxOP) associated with the first apparatus; means for determining to allow concurrent access by at least one second apparatus among the one or more second apparatuses to the TxOP; and means for transmitting, to the at least one second apparatus, allocation information for allocating at least one sub-bandwidth portion of a bandwidth associated with the TxOP to the at least one second apparatus.

In some embodiments, the apparatus further comprises means for performing other steps in some embodiments of the method 700. In some embodiments, the means comprises at least one processor; and at least one memory including computer program code, the at least one memory and computer program code configured to, with the at least one processor, cause the performance of the apparatus.

In some embodiments, an apparatus capable of performing any of the method 800 (for example, the second AP 112 or the second AP 113 in Fig. 1A) may comprise means for performing the respective steps of the method 800. The means may be implemented in any suitable form. For example, the means may be implemented in a circuitry or software module.

In some embodiments, the apparatus comprises: means for transmitting, at a first apparatus to a first apparatus, a request for resource allocation on a transmission opportunity (TxOP) associated with the first apparatus; and means for receiving, from the first apparatus, allocation information for allocating at least one sub-bandwidth portion of a bandwidth associated with the TxOP to at least one second apparatus comprising the second apparatus.

In some embodiments, the apparatus further comprises means for performing other steps in some embodiments of the method 800. In some embodiments, the means comprises at least one processor; and at least one memory including computer program code, the at least one memory and computer program code configured to, with the at least one processor, cause the performance of the apparatus.

In some embodiments, an apparatus capable of performing any of the method 900 (for example, the non-AP STA 122 in Fig. 1A) may comprise means for performing the respective steps of the method 900. The means may be implemented in any suitable form. For example, the means may be implemented in a circuitry or software module.

In some embodiments, the apparatus comprises: means for determining, at an apparatus, a sub-bandwidth portion of a bandwidth allocated to a second access point (AP) device for accessing a transmission opportunity (TxOP) associated with a first AP device, wherein the apparatus is associated with the second AP device, and the bandwidth is associated with the TxOP; and means for communicating with the second AP device on the sub-bandwidth portion.

In some embodiments, the apparatus further comprises means for performing other steps in some embodiments of the method 900. In some embodiments, the means comprises at least one processor; and at least one memory including computer program code, the at least one memory and computer program code configured to, with the at least one processor, cause the performance of the apparatus.

In some embodiments, an apparatus capable of performing any of the method 1000 (for example, the second AP 112 or the second AP 113 in Fig. 1A) may comprise means for performing the respective steps of the method 1000. The means may be implemented in any suitable form. For example, the means may be implemented in a circuitry or software module.

In some embodiments, the apparatus comprises: means for determining, at a second apparatus, a sub-bandwidth portion of a bandwidth allocated to the second apparatus for accessing a transmission opportunity (TxOP) associated with a first apparatus, wherein the bandwidth is associated with the TxOP; means for determining an allocated duration for the second apparatus on the sub-bandwidth portion; and means for communicating with at least one non-access point (non-AP) station device associated with the second apparatus within the allocated duration on the sub-bandwidth portion.

In some embodiments, the apparatus further comprises means for performing other steps in some embodiments of the method 1000. In some embodiments, the means comprises at least one processor; and at least one memory including computer program code, the at least one memory and computer program code configured to, with the at least one processor, cause the performance of the apparatus.

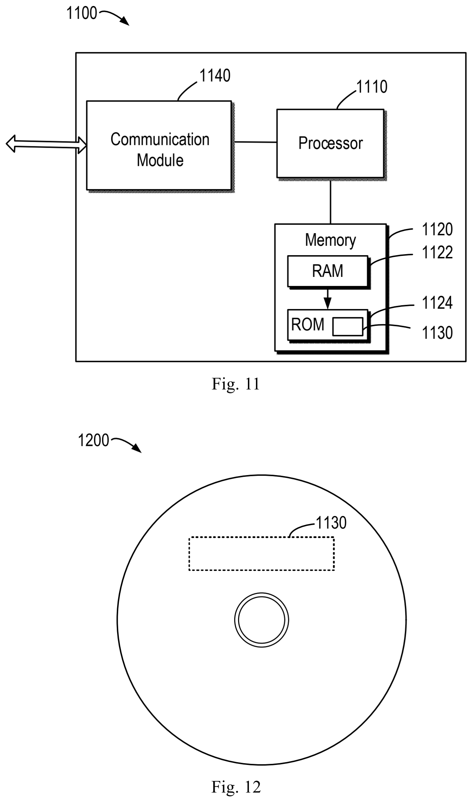

FIG. 11 is a simplified block diagram of a device 1100 that is suitable for implementing embodiments of the present disclosure. The device 1100 may be provided to implement the communication device, for example non-AP STA 111, AP(s) 110 or AP 122 as shown in Fig. 1A. As shown, the device 1100 includes one or more processors 1110, one or more memories 1140 coupled to the processor 1110, and one or more transmitters and/or receivers (TX/RX) 1140 coupled to the processor 1110.

The TX/RX 1140 is for bidirectional communications. The TX/RX 1140 has at least one antenna to facilitate communication. The communication interface may represent any interface that is necessary for communication with other network elements.

The processor 1110 may be of any type suitable to the local technical network and may include one or more of the following: general purpose computers, special purpose computers, microprocessors, digital signal processors (DSPs) and processors based on multicore processor architecture, as non-limiting examples. The device 1100 may have multiple processors, such as an application specific integrated circuit chip that is slaved in time to a clock which synchronizes the main processor.

The memory 1120 may include one or more non-volatile memories and one or more volatile memories. Examples of the non-volatile memories include, but are not limited to, a Read Only Memory (ROM) 1124, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1122 and other volatile memories that will not last in the power-down duration.

A computer program 1130 includes computer executable instructions that are executed by the associated processor 1110. The program 1130 may be stored in the ROM 1020. The processor 1110 may perform any suitable actions and processing by loading the program 1130 into the RAM 1020.

The embodiments of the present disclosure may be implemented by means of the program 1130 so that the device 1100 may perform any process of the disclosure as discussed with reference to FIGs. 2A to 10. The embodiments of the present disclosure may also be implemented by hardware or by a combination of software and hardware.

In some embodiments, the program 1130 may be tangibly contained in a computer readable medium which may be included in the device 1100 (such as in the memory 1120) or other storage devices that are accessible by the device 1100. The device 1100 may load the program 1130 from the computer readable medium to the RAM 1122 for execution. The computer readable medium may include any types of tangible non-volatile storage, such as ROM, EPROM, a flash memory, a hard disk, CD, DVD, and the like. Fig. 12 shows an example of the computer readable medium 1200 in form of CD or DVD. The computer readable medium has the program 1130 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 1100 as described above with reference to FIGs. 2A-10. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus, comprising:
at least one processor; and
at least one memory storing instructions that, when executed by the at least one processor, cause the apparatus at least to:
determine a sub-bandwidth portion of a bandwidth allocated to a second access point (AP) device for accessing a transmission opportunity (TxOP) associated with a first AP device, wherein the apparatus is associated with the second AP device, and the bandwidth is associated with the TxOP; and
communicate with the second AP device on the sub-bandwidth portion.

2. The apparatus of claim 1, wherein the apparatus is further caused to:
receive, from the first AP device, a trigger frame for enabling sharing of the TxOP, wherein the trigger frame carries allocation information, and the sub-bandwidth portion is determined based on the allocation information,
wherein the trigger frame is a multi-user request to send (MU-RTS) transmission (TXS) trigger frame.

3. The apparatus of claim 1, wherein the apparatus is further caused to:
receive, from the second AP device, a response frame associated with a trigger frame for enabling sharing of the TxOP, wherein the sub-bandwidth portion is determined based on the response frame,
wherein the trigger frame is a multi-user request to send (MU-RTS) transmission (TXS) trigger frame.

4. The apparatus of claim 3, wherein the response frame is received on the sub-bandwidth portion or on a primary channel of the second AP device on the TxOP,
wherein the response frame is a clear-to-send (CTS) frame.

5. The apparatus of claim 3, wherein the response frame carries at least one of the following:
an indication of the sub-bandwidth portion of the bandwidth allocated to the second apparatus; or
an indication of a primary channel of the second apparatus on the TxOP.

6. The apparatus of claim 1, wherein the apparatus is further caused to:
determine a primary channel of the second AP device on the TxOP;
based on determining that the primary channel is different from a reference primary channel, switch from the reference primary channel to the determined primary channel; and
based on determining that the communication terminates, switch back from the determine primary channel to the reference primary channel.

7. The apparatus of claim 6, wherein the apparatus is further caused to:
receive, from the first AP device, an indication indicative of a switching delay of switching from the reference primary channel to the primary channel of the second AP device on the TxOP and switching back from the primary channel of the second AP device on the TxOP to the reference primary channel.

8. The apparatus of claim 1, wherein the apparatus is further caused to:
receive, from the first AP device, a trigger frame for enabling sharing of the TxOP, the trigger frame comprises a field indicative of at least one channel within the sub-bandwidth portion; and
determine a primary channel of the second AP device on the TxOP as one of the following:
a first one among the at least one channel indicated in the field; or
a last one among the at least one channel indicated in the field,
wherein the trigger frame is a multi-user request to send (MU-RTS) transmission (TXS) trigger frame.

9. The apparatus of claim 1, wherein the apparatus is further caused to:
receive, from the first AP device, a trigger frame for enabling sharing of the TxOP, the trigger frame comprises at least one bit for indicating a primary channel of the second AP device on the TxOP,
wherein the trigger frame is a multi-user request to send (MU-RTS) transmission (TXS) trigger frame.

10. The apparatus of claim 1, wherein the first AP device acts as a sharing access point (AP) device, and the second AP device acts as a shared AP device, wherein the apparatus is a non-AP station device.

11. A second apparatus comprising:
at least one processor; and
at least one memory storing instructions that, when executed by the at least one processor, cause the second apparatus at least to:
determine a sub-bandwidth portion of a bandwidth allocated to the second apparatus for accessing a transmission opportunity (TxOP) associated with a first apparatus, wherein the bandwidth is associated with the TxOP;
determine an allocated duration for the second apparatus on the sub-bandwidth portion; and
communicate with at least one non-access point (non-AP) station device associated with the second apparatus within the allocated duration on the sub-bandwidth portion.

12. The second apparatus of claim 11, wherein the second apparatus is further caused to:
receive, from the first apparatus, a trigger frame for enabling sharing of the TxOP, wherein the trigger frame carries allocation information, and the sub-bandwidth portion and the allocated duration are determined based on the allocation information.

13. The second apparatus of claim 11, wherein the second apparatus is further caused to:
receive, from the first apparatus, a trigger frame for enabling sharing of the TxOP; and
transmit, to the first apparatus, a response frame associated with the trigger frame, wherein the response frame is associated with sub-bandwidth portion.

14. The second apparatus of claim 11, wherein the second apparatus is further caused to:
determine a primary channel of the second apparatus on the TxOP;
based on determining that the primary channel is different from a reference primary channel, switch from the reference primary channel to the determined primary channel; and
based on determining that the communication with the at least one non-AP station device terminates, switch back from the determine primary channel to the reference primary channel.

15. A method comprising:
determining, at an apparatus, a sub-bandwidth portion of a bandwidth allocated to a second access point (AP) device for accessing a transmission opportunity (TxOP) associated with a first AP device, wherein the apparatus is associated with the second AP device, and the bandwidth is associated with the TxOP; and
communicating with the second AP device on the sub-bandwidth portion.
